# EUROPEAN PATENT APPLICATION

(11) **EP 4 550 547 A1**
(43) Date of publication of application: **07.05.2025**
(21) Application number: 23829700.6
(22) Date of filing: 05.05.2023
(51) Int. Cl.: H01M 50/287, H01M 50/244

(54) **ENERGY STORAGE DEVICE, AND ENERGY STORAGE DEVICE CONTROL SYSTEM HAVING SAME**

(30) Priority: 01.07.2022 CN 202210768918
(71) Applicant: BYD Company Limited, Shenzhen, Guangdong 518118 (CN)
(72) Inventor: ZHOU, Lei, Shenzhen, Guangdong 518118 (CN); HUANG, Zhizhi, Shenzhen, Guangdong 518118 (CN); HUANG, Zhengyi, Shenzhen, Guangdong 518118 (CN); CHEN, Hao, Shenzhen, Guangdong 518118 (CN); LIANG, Yufei, Shenzhen, Guangdong 518118 (CN)
(74) Representative: Mathys & Squire
(86) International application number: PCT/CN2023/092320
(87) International publication number: WO 2024/001514

(57) **Abstract**

An energy storage device (100) and an energy storage device control system (200) having the same are provided. The energy storage device (100) comprises: a box body (1), two sides of which in a left-right direction are provided with openings (11); a first end cover assembly (12) and a second end cover assembly (13) respectively arranged on the two sides of the box body (1) and detachably connected to the box body (1), an accommodating cavity being jointly defined by the first end cover assembly (12), the second end cover assembly (13), and the box body (1); a battery management system (2) arranged in the box body (1); and a battery module (3) arranged in the accommodating cavity, the battery module (3) and the battery management system (2) being arranged in an up-down direction, at least two battery core groups (32) being arranged in the up-down direction, a plurality of battery cores (321) being arranged side by side in a front-rear direction, and each battery core (321) extending in the left-right direction.

## Description

### FIELD

The present disclosure relates to the technical field of batteries, and specifically to an energy storage device, and an energy storage device control system having the same.

### BACKGROUND

In the related art, typical energy storage devices are generally integrally designed. When a fault occurs in an energy storage device, maintenance of the energy storage device is not facilitated, resulting in high maintenance costs of the energy storage device. In addition, when the energy storage device is placed on the ground, problems include that the energy storage device occupies a large space and utilization of an upper space of the energy storage device is low. As a result, the size of the energy storage device in a vertical direction is large, and it is not easy to mount the energy storage device on a wall, resulting in low applicability of the energy storage device and inability to fully meet a mounting requirement of a user.

### SUMMARY

The present disclosure aims to resolve at least one of the technical problems in the related art. Therefore, one objective of the present disclosure is to provide an energy storage device. The energy storage device may be mounted on a wall or the energy storage device may be placed on the ground, thereby improving applicability of the energy storage device, so that the energy storage device can better meet mounting requirements of users.

The other objective of the present disclosure is to provide an energy storage device control system using the foregoing energy storage device.

An energy storage device according to an embodiment of a first aspect of the present disclosure comprises: a box body, two sides of the box body in a left-right direction being provided with openings; a first end cover assembly and a second end cover assembly, the first end cover assembly and the second end cover assembly being respectively arranged on the two sides of the box body, the first end cover assembly and the second end cover assembly being both detachably connected to the box body, the first end cover assembly and the second end cover assembly being configured to close the openings, and the first end cover assembly, the second end cover assembly, and the box body jointly defining an accommodating cavity; a battery management system, the battery management system being arranged in the accommodating cavity, and the battery management system extending in the left-right direction; and a battery module, the battery module being arranged in the accommodating cavity, the battery module and the battery management system being arranged in an up-down direction, the battery module comprising a module housing and a plurality of battery core groups, the plurality of battery core groups being arranged in the module housing, at least two of the battery core groups being arranged in the up-down direction, each of the battery core groups comprising a plurality of battery cores, the plurality of battery cores being arranged side by side in a front-rear direction, and each of the battery cores extending in the left-right direction. The battery module and the battery management system are removable from the accommodating cavity through the openings.

According to the energy storage device in this embodiment of the present disclosure, the first end cover assembly and the second end cover assembly are respectively arranged on the two sides of the box body in the left-right direction and are detachably connected to the box body, the battery management system extends in the left-right direction, the battery module and the battery management system are arranged in the up-down direction, at least two battery core groups of the plurality of battery core groups of the battery module are arranged in the up-down direction, a plurality of battery cores of each battery core group are arranged side by side in the front-rear direction, and each battery core extends in the left-right direction. Therefore, compared with a conventional energy storage device, it is convenient to maintain the energy storage device, and maintenance costs can be reduced. In addition, the energy storage device can be miniaturized, lightened, and thinned, a size of the energy storage device in a horizontal direction is large, and a size of the energy storage device in a vertical direction is small, so that the energy storage device may be mounted on a wall or the energy storage device may be placed on the ground, thereby improving applicability of the energy storage device. Therefore, the energy storage device can better meet mounting requirements of users.

According to some examples of the present disclosure, both the first end cover assembly and the second end cover assembly are hermetically connected to the box body; the first end cover assembly comprises a first inner end cover, the first inner end cover is detachably arranged at the opening, and the first inner end cover closes the opening, a switch is arranged on the first inner end cover, the switch communicates with the battery management system, and the switch is configured to control power-on and power-off of the energy storage device; and the first end cover assembly further comprises a first outer end cover, the first outer end cover is detachably connected to the first inner end cover and defines a first space together with the first inner end cover, and the switch is arranged in the first space.

According to some examples of the present disclosure, the second end cover assembly comprises a wire connection member, at least one of a power wire and a communication wire of the battery management system is electrically connected to the wire connection member, and the wire connection member is configured to be electrically connected to an external cable; and/or the second end cover assembly comprises a second inner end cover, the second inner end cover is detachably connected to the box body, the wire connection member is arranged on the second inner end cover, the second end cover assembly further comprises a second outer end cover, the second outer end cover is detachably connected to the second inner end cover, the second outer end cover and the second inner end cover define a second space, and the wire connection member is arranged in the second space.

According to some examples of the present disclosure, at least one first separation member is arranged between two adjacent battery cores, the two adjacent battery cores are separated by the first separation member, and a width of the first separation member is less than a width of the battery core; and a thickness of the first separation member is w, where w satisfies: 0.1 mm ≤ w ≤ 1 mm.

According to some examples of the present disclosure, an outermost battery core in the battery core group is a first battery core, at least one second separation member is arranged between the first battery core and an inner wall of the box body, the first battery core is separated from the inner wall of the box body by the second separation member, and a width of the second separation member is less than the width of the battery core.

According to some examples of the present disclosure, a first insulation member is arranged between two adjacent battery core groups; and at least one second insulation member is arranged between an outer surface of the battery module and the inner wall of the box body, and the outer surface of the battery module is separated from the inner wall of the box body by the second insulation member.

According to some examples of the present disclosure, the module housing comprises: two first side plates, where the two first side plates are spaced apart from each other, and the two first side plates are located on a front side and a rear side of the battery module; and two second side plates, where the two second side plates are spaced apart from each other, the two second side plates are located on an upper side and a lower side of the battery module, the two second side plates and the two first side plates jointly define a holding cavity, and the holding cavity is configured to accommodate the plurality of battery core groups. The second insulation member is arranged between the outer surface of the battery module and the first side plates and/or the second side plates.

According to some examples of the present disclosure, a plurality of second insulation members are provided, and the plurality of second insulation members comprise: a plurality of first insulation sub-members, where at least one of the first insulation sub-members is arranged on the first side plate and a surface of the battery module opposite to the first side plate; and a plurality of second insulation sub-members, where at least one of the second insulation sub-members is arranged on the second side plate and a surface of the battery module opposite to the second side plate.

According to some examples of the present disclosure, an accommodating cavity is defined in the box body, and at least one connection sheet is connected between a side surface of the battery module adj acent to the opening and the box body; and the connection sheet comprises a first side and a second side in the up-down direction of the box body, the first side is connected to the side surface of the battery module adjacent to the opening, the second side is connected to the box body, and a length of the first side in the up-down direction of the box body is greater than a length of the second side in the up-down direction of the box body.

According to some examples of the present disclosure, a plurality of first connection holes are formed on the first side, and the plurality of first connection holes are spaced apart in the up-down direction of the box body. The energy storage device further comprises: a plurality of first fasteners. The plurality of first fasteners respectively pass through the plurality of first connection holes to connect the connection sheet to the battery module. A plurality of second connection holes are formed on the second side, and the plurality of second connection holes are spaced apart in the up-down direction of the box body. A plurality of connection structures are arranged on an inner wall of the accommodating cavity, and the plurality of connection structures are spaced apart in the up-down direction of the box body. The energy storage device further comprises: a plurality of second fasteners. The plurality of second fasteners respectively pass through the plurality of second connection holes, and the plurality of second fasteners are respectively connected to the plurality of connection structures.

According to some examples of the present disclosure, the plurality of first connection holes comprise a first connection sub-hole and a second connection sub-hole, and the first connection sub-hole and the second connection sub-hole are respectively located at two ends of the first side in the up-down direction of the box body; the plurality of second connection holes comprise a third connection sub-hole and a fourth connection sub-hole, the third connection sub-hole and the fourth connection sub-hole are respectively located at two ends of the second side in the up-down direction of the box body, the third connection sub-hole and the first connection sub-hole are located at one end of the connection sheet in a length direction, and the fourth connection sub-hole and the second connection sub-hole are located at the other end of the connection sheet in the length direction; and a distance between the third connection sub-hole and the first connection sub-hole is greater than a distance between the fourth connection sub-hole and the second connection sub-hole.

According to some examples of the present disclosure, the battery module and the battery management system are spaced apart from each other, a plurality of anti-collision structures are arranged on at least one of the outer surface of the battery module and the inner wall of the box body, and the outer surface of the battery module is spaced apart from the inner wall of the box body by the plurality of anti-collision structures; and the plurality of anti-collision structures are arranged on the inner wall of the box body, the plurality of anti-collision structures are spaced apart from each other in a circumferential direction of the box body, each of the anti-collision structures extends in the left-right direction of the box body, a through-hole penetrating in the left-right direction of the box body is formed on each of the anti-collision structures, and a side of the through-hole facing the battery module is open.

According to some examples of the present disclosure, the plurality of anti-collision structures comprise: a plurality of first anti-collision structures, where the plurality of first anti-collision structures are arranged adj acent to the battery management system, two adjacent first anti-collision structures are spaced apart in the front-rear direction of the box body to define a first sliding slot, and at least a part of the battery management system is slidably matched in the first sliding slot; a plurality of second anti-collision structures, where the plurality of second anti-collision structures are respectively arranged on two side walls of the box body in the front-rear direction, at least two of the second anti-collision structures are arranged on each of the side walls, the at least two second anti-collision structures are spaced apart in the up-down direction of the box body, and the plurality of second anti-collision structures are respectively opposite to two side surfaces of the battery module in the front-rear direction of the box body; and a plurality of third anti-collision structures, where the plurality of third anti-collision structures are arranged on a side of the box body adjacent to the battery module in the up-down direction, the plurality of third anti-collision structures are spaced apart from each other in the front-rear direction of the box body, and a bottom surface of the battery module is supported on the plurality of third anti-collision structures.

According to some examples of the present disclosure, the battery management system comprises a plate body and at least one heat dissipation plate, at least one electrical element is arranged on a side of the plate body adjacent to the battery module, the heat dissipation plate is arranged on a side of the plate body facing away from the electrical element, the heat dissipation plate is at least opposite to the electrical element, and the heat dissipation plate is slidably matched in the first sliding slot. The heat dissipation plate comprises: a first heat dissipation piece, where the first heat dissipation piece is arranged on the plate body; and a second heat dissipation piece, where the second heat dissipation piece is connected to the first heat dissipation piece, the second heat dissipation piece is located on a side of the first heat dissipation piece away from the plate body, a width of the second heat dissipation piece in the front-rear direction of the box body is less than a width of the first heat dissipation piece in the front-rear direction of the box body, and the second heat dissipation piece is slidably matched in the first sliding slot.

According to some examples of the present disclosure, each of the battery cores comprises a battery core body and a plurality of terminals, and the plurality of terminals are respectively arranged at two ends of the battery core body. The energy storage device further comprises: a plurality of terminal guide plates, where the plurality of terminal guide plates are respectively in a one-to-one correspondence with the plurality of battery core groups, the terminal guide plate is arranged on the battery module, the terminal guide plate is located at one end of the plurality of battery cores, and the terminal guide plate is electrically connected between terminals at the one end of the plurality of battery cores and housings of the battery core bodies of the plurality of battery cores; a battery core sampling plate, where the battery core sampling plate is arranged at the other end of the plurality of battery cores, and the battery core sampling plate is electrically connected to at least the housings of the plurality of battery cores; a collection plate, where the collection plate is arranged on a side of the battery core sampling plate away from the battery module, at least one connector is arranged on the collection plate, and the collection plate is electrically connected to the battery core sampling plate by the connector; and a protective cover, where the protective cover covers a side of the collection plate away from the battery core sampling plate.

According to some examples of the present disclosure, the battery management system extends in the left-right direction of the box body, the battery module and the battery management system are arranged in the up-down direction of the box body, and the battery management system is pivotably connected to the end cover assembly around a central axis in the front-rear direction of the box body. The battery management system comprises: a tray, where the tray is pivotably connected to the end cover assembly; and a plate body, where the plate body is arranged on the tray, the power wire and the communication wire are arranged on the plate body, the power wire and the communication wire are located on a side of the plate body adjacent to the center of the box body, and the power wire extends in the left-right direction of the box body.

According to some examples of the present disclosure, a plurality of guide rails are arranged on a bottom wall of the box body, the plurality of guide rails all extend in the left-right direction of the box body, and the plurality of guide rails are spaced apart from each other in the front-rear direction of the box body. The battery module is arranged in a push-pull manner in the box body in the left-right direction of the box body, and the bottom surface of the battery module is supported on the plurality of guide rails. Each of the guide rails comprises: a first connection segment, where the first connection segment extends in the up-down direction of the box body, and one end of the first connection segment is connected to the bottom wall of the box body; a second connection segment, where the first connection segment extends in the front-rear direction of the box body, the second connection segment is connected to the other end of the first connection segment, and the bottom surface of the battery module is supported on the second connection segment; and at least one third connection segment, where one end of the third connection segment is connected to a free end of the second connection segment, and the other end of the third connection segment extends obliquely toward the bottom wall of the box body.

According to some examples of the present disclosure, at least one suspension member is arranged on each of the end covers. The energy storage device further comprises: a plurality of mounting ears. The plurality of mounting ears are respectively arranged at a left end and a right end of the box body, the plurality of mounting ears are respectively matched with the first end cover assembly and the second end cover assembly, the first end cover assembly and the second end cover assembly are each provided with an accommodating space, the plurality of mounting ears are hidden in the accommodating spaces, and the box body is adapted to be connected to a wall by the plurality of mounting ears. Each of the mounting ears comprises: a first mounting piece, where the first mounting piece is adapted to be connected to the wall; and a second mounting piece, where one end of the second mounting piece is connected to the first mounting piece, the other end of the second mounting piece extends toward the center of the accommodating space, at least one suspension hole is formed on the second mounting piece, and the box body is adapted to be mounted on the wall through matching between the suspension member and the suspension hole.

According to some examples of the present disclosure, a length of the energy storage device is L₁, a width of the energy storage device is L₂, a height of the energy storage device is L₃, and L₁, L₂, and L₃ respectively satisfy: 0 mm < L₁ ≤ 685 mm, 0 mm < L₂ < 135 mm, and 0 mm < L₃ ≤ 185 mm.

An energy storage device control system according to an embodiment of a second aspect of the present disclosure comprises: a plurality of energy storage devices, the plurality of energy storage devices being connected in parallel, each of the energy storage devices comprising a battery management system and a battery information collector, and the energy storage device being the energy storage device according to the embodiment of the first aspect of the present disclosure; a battery management unit, the battery management unit being communicatively connected to each of the battery management systems in the plurality of energy storage devices, and the battery information collector being communicatively connected to the battery management system; and an energy management system or an inverter, the energy management system or the inverter being communicatively connected to the battery management unit.

Additional aspects and advantages of the disclosure will be given in the following description, some of which will become apparent from the following description or may be learned from practices of the disclosure.

### BRIEF DESCRIPTION OF THE DRAWINGS

The foregoing and/or additional aspects and advantages of the disclosure will become apparent and comprehensible in the description of the embodiments made with reference to the following accompanying drawings.
FIG. 1 is a schematic view of an energy storage device according to an embodiment of the present disclosure;
FIG. 2 is an exploded view of the energy storage device shown in FIG. 1;
FIG. 3 is a side view of an energy storage device according to an embodiment of the present disclosure, where an end cover is not shown;
FIG. 4 is a side view of an energy storage device according to an embodiment of the present disclosure, where a decorative cover is not shown;
FIG. 5 is a schematic diagram of a box body, a battery module, and a battery management system of an energy storage device according to an embodiment of the present disclosure;
FIG. 6 is a schematic view of a battery management system of an energy storage device according to an embodiment of the present disclosure;
FIG. 7 is a side view of the battery management system of the energy storage device shown in FIG. 6;
FIG. 8 is a schematic diagram of a battery management system and an end cover of an energy storage device according to an embodiment of the present disclosure;
FIG. 9 is an enlarged view of part A circled in FIG. 8;
FIG. 10 is an enlarged view of part B circled in FIG. 8;
FIG. 11 is a schematic view of a first end cover assembly of an energy storage device according to an embodiment of the present disclosure;
FIG. 12 is a schematic view of a second end cover assembly of an energy storage device according to an embodiment of the present disclosure;
FIG. 13 is a schematic view of a mounting ear of an energy storage device according to an embodiment of the present disclosure;
FIG. 14 is an exploded view of a battery module of an energy storage device according to an embodiment of the present disclosure;
FIG. 15 is a side view of the battery module of the energy storage device shown in FIG. 14;
FIG. 16 is a schematic view of a connection sheet of an energy storage device according to an embodiment of the present disclosure;
FIG. 17 is a schematic view of a heat dissipation plate of an energy storage device according to an embodiment of the present disclosure;
FIG. 18 is a schematic view of a box body of an energy storage device according to an embodiment of the present disclosure;
FIG. 19 is a schematic view of an energy storage device mounted on a wall according to an embodiment of the present disclosure;
FIG. 20 is a schematic view of an energy storage device control system according to an embodiment of the present disclosure; and
FIG. 21 is a circuit diagram of an energy storage device control system according to an embodiment of the present disclosure.

In the drawings:
100: energy storage device;
1: box body; 11: opening; 111: connection structure; 112: anti-collision structure; 1121: first anti-collision structure; 1122: first sliding slot; 113: second anti-collision structure; 114: third anti-collision structure; 115: guide rail; 1151: first connection segment; 1152: second connection segment; 1153: third connection segment; 12: first end cover assembly; 121: first inner end cover; 1211: suspension member; 122: first outer end cover; 13: second end cover assembly; 131: second inner end cover; 132: second outer end cover; 133: wire connection member; 2: battery management system; 21: plate body; 22: heat dissipation plate; 221: first heat dissipation piece; 222: second heat dissipation piece; 23: electrical element; 24: tray; 25: power wire; 26: communication wire; 3: battery module; 31: module housing; 311: first side plate; 312: second side plate; 32: battery core group; 321: battery core; 322: first battery core; 323: battery core body; 324: terminal; 325: housing; 33: first separation member; 34: second separation member; 35: first insulation member; 36: second insulation member; 361: first insulation sub-member; 362: second insulation sub-member; 37: connection sheet; 371: first connection hole; 3711: first connection sub-hole; 3712: second connection sub-hole; 372: second connection hole; 3721: third connection sub-hole; 3722: fourth connection sub-hole; 373: avoidance notch; 38: terminal guide plate; 381: body; 382: first connection sheet; 383: second connection sheet; 39: battery core sampling plate; 40: collection plate; 401: connector; 41: protective cover; 4: first fastener; 5: second fastener; 6: mounting ear; 61: first mounting piece; 62: second mounting piece; 621: suspension hole; 7: handle; 8: switch; 200: energy storage device control system; 201: battery management unit; 202: battery information collector; 203: energy management system.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining the disclosure, and should not be construed as a limitation on the disclosure.

It is to be understood that, in the description of the present disclosure, a direction or positional relationship indicated by terms such as "center", "up", "down", "front", "rear", "left", "right", "vertical", "horizontal", "top", "bottom", "in", and "out" is a direction or positional relationship based on illustrations in the drawings, and is merely intended for ease or brevity of description of the present disclosure, but does not necessarily mean or imply that the indicated device or component is provided in the specified direction or constructed or operated in the specified direction. Therefore, such terms are not to be understood as a limitation on the present disclosure.

It is to be noted that, the terms "first" and "second" are merely used for descriptive purposes but are not to be construed as indicating or implying relative importance or implicitly specifying the number of technical features indicated. Therefore, features defining "first" and "second" may explicitly or implicitly include one or more such features. Further, in the description of the present disclosure, unless otherwise stated, "a plurality of" means two or more than two.

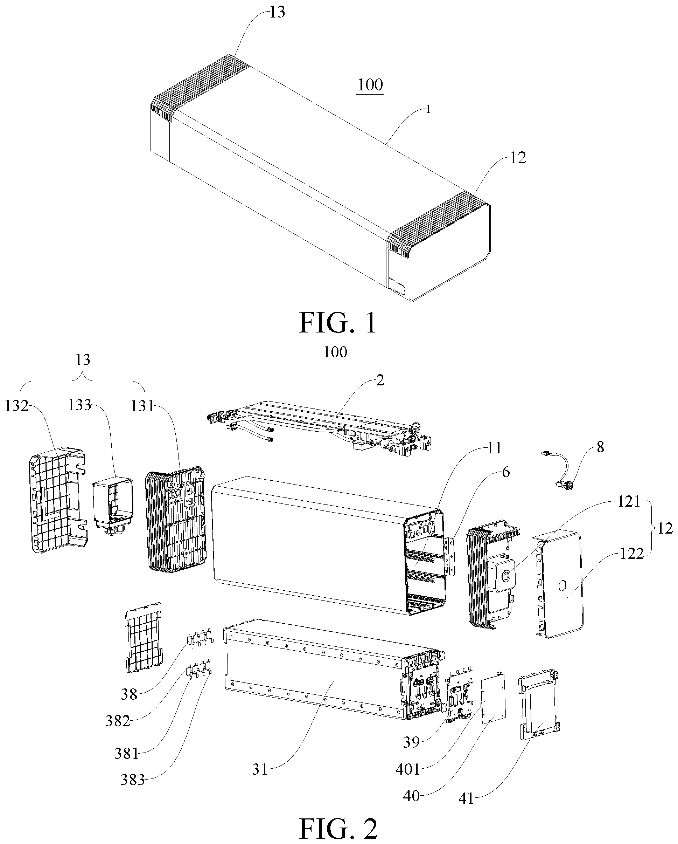

An energy storage device 100 according to an embodiment of the present disclosure will be described below with reference to FIG. 1 to FIG. 19.

As shown in FIG. 1 to FIG. 19, the energy storage device 100 according to this embodiment of the present disclosure comprises a box body 1, a first end cover assembly 12, a second end cover assembly 13, a battery management system 2, and a battery module 3.

Specifically, two sides of the box body 1 in a left-right direction are provided with openings 11, the first end cover assembly 12 and the second end cover assembly 13 are respectively arranged on the two sides of the box body 1, the first end cover assembly 12 and the second end cover assembly 13 are both detachably connected to the box body 1, the first end cover assembly 12 and the second end cover assembly 13 are configured to close the openings 11, and the first end cover assembly 12, the second end cover assembly 13, and the box body 1 jointly define an accommodating cavity. The battery management system 2 is arranged in the accommodating cavity, and the battery management system 2 extends in the left-right direction. The battery module 3 is arranged in the accommodating cavity, the battery module 3 and the battery management system 2 are arranged in an up-down direction, the battery module 3 comprises a module housing 31 and a plurality of battery core groups 32, the plurality of battery core groups 32 are arranged in the module housing 31, at least two of the battery core groups 32 are arranged in the up-down direction, each battery core group 32 comprises a plurality of battery cores 321, the plurality of battery cores 321 are arranged side by side in a front-rear direction, and each battery core 321 extends in the left-right direction. The battery module 3 and the battery management system 2 are removable from the accommodating cavity through the openings 11.

It should be noted that, with reference to FIG. 2, the left-right direction refers to a length direction of the energy storage device 100, the up-down direction refers to a width direction of the energy storage device 100, and the front-rear direction refers to a thickness direction of the energy storage device 100.

For example, in the examples shown in FIG. 1, FIG. 2, FIG. 14, and FIG. 15, the shape of the energy storage device 100 is substantially rectangular, two ends of the box body 1 in the length direction are open to form the openings 11, and there are two battery core groups 32. The two battery core groups 32 are arranged in the up-down direction, each battery core group 32 comprises eight battery cores 321, and the eight battery cores 321 are arranged in the front-rear direction. The battery management system 2 is electrically connected to the battery module 3, and the battery management system 2 is configured to monitor data such as a voltage and a temperature of the battery module 3. During assembly, the battery management system 2 and the battery module 3 may be pushed into the box body 1 from the opening 11 at one end of the box body 1, and then the first end cover assembly 12 and the second end cover assembly 13 close the openings 11 to prevent other external impurities from entering the box body 1, thereby ensuring the cleanliness inside the box body 1. When the energy storage device 100 needs to be maintained, the first end cover assembly 12 and the second end cover assembly 13 may be detached from the box body 1, and then the battery management system 2 and the battery module 3 are removed from the box body 1 to replace damaged components.

Therefore, compared with the conventional energy storage device, the first end cover assembly 12 and the second end cover assembly are detachably connected to the box body 1, which facilitates detachment of the energy storage device 100 during maintenance, thereby improving maintenance efficiency of the energy storage device 100 and reducing maintenance costs. In addition, utilization of an internal space of the box body 1 of the energy storage device 100 can be increased, so that more battery cores 321 can be arranged in the same space, an energy density of the battery core group 32 can be increased, and the energy storage device 100 can be miniaturized, lightened, and thinned. Because the battery management system 2 and the battery core 321 extend in the length direction of the box body 1, a size of the energy storage device 100 in a horizontal direction is large, and a size of the energy storage device 100 in a vertical direction is small. During mounting, the energy storage device 100 occupies less space in the vertical direction, so that the energy storage device 100 may be mounted on a wall, and the energy storage device 100 may also be placed on the ground, thereby improving applicability of the energy storage device 100.

According to the energy storage device 100 in this embodiment of the present disclosure, the first end cover assembly 12 and the second end cover assembly 13 are respectively arranged on the two sides of the box body 1 in the left-right direction, the first end cover assembly 12 and the second end cover assembly 13 are both detachably connected to the box body 1, the battery management system 2 extends in the left-right direction, the battery module 3 and the battery management system 2 are arranged in the up-down direction, at least two battery core groups 32 of the plurality of battery core groups 32 of the battery module 3 are arranged in the up-down direction, a plurality of battery cores 321 of each battery core group 32 are arranged side by side in the front-rear direction, and each battery core 321 extends in the left-right direction. Therefore, compared with a conventional energy storage device, it is convenient to maintain the energy storage device 100, and maintenance costs can be reduced. In addition, the energy storage device 100 can be miniaturized, lightened, and thinned, a size of the energy storage device 100 in a horizontal direction is large, and a size of the energy storage device 100 in a vertical direction is small, so that the energy storage device 100 may be mounted on a wall or the energy storage device 100 may be placed on the ground, thereby improving applicability of the energy storage device 100. Therefore, the energy storage device 100 can better meet mounting requirements of users.

According to some embodiments of the present disclosure, as shown in FIG. 1, both the first end cover assembly 12 and the second end cover assembly 13 are hermetically connected to the box body 1; Through this arrangement, a waterproof and dustproof effect of the energy storage device 100 can be enhanced. When the first end cover assembly 12 and the second end cover assembly 13 are hit, the first end cover assembly 12 and the second end cover assembly 13 can absorb a force, to prevent the force from being transferred to the battery management system 2 and the battery module 3, thereby enhancing the protection level of the energy storage device 100, so that the protection level of the energy storage device 100 can reach IP65.

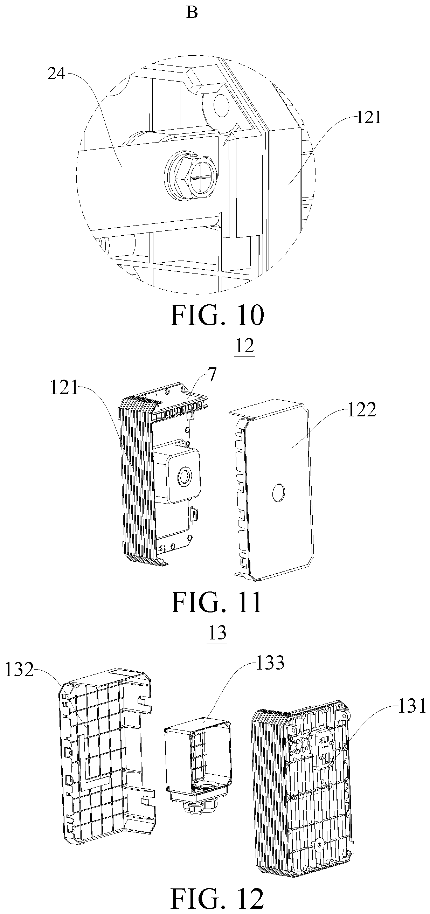

Further, referring to FIG. 2 and FIG. 11, the first end cover assembly 12 comprises a first inner end cover 121, the first inner end cover is detachably arranged at the opening 11, and the first inner end cover 121 closes the opening 11, a switch 8 is arranged on the first inner end cover 121, the switch 8 communicates with the battery management system 2, and the switch 8 is configured to control power-on and power-off of the energy storage device 100. Optionally, the switch 8 is a key switch, but is not limited thereto.

For example, when the energy storage device 100 operates, a key action of the switch 8 may be detected through the battery management system 2, to control a driving circuit (not shown) of the energy storage device 100 to close or open a driving relay (not shown), thereby powering on and powering off the energy storage device 100. Through this arrangement, the energy storage device 100 can be opened and closed by arranging only one switch 8 on the box body 1, which simplifies the structure of the energy storage device 100, is simple to display, is simple to operate, and is convenient for a user to use, thereby improving user experience.

The first end cover assembly 12 further comprises a first outer end cover 122, the first outer end cover 122 is detachably connected to the first inner end cover 121 and defines a first space together with the first inner end cover 121, and the switch 8 is arranged in the first space. Therefore, the first outer end cover 122 can protect the switch 8 to prevent the switch 8 from being damaged. In addition, the first outer end cover 122 can be configured to block components at one end of the box body 1, so that the appearance of the energy storage device 100 is more aesthetic. Optionally, the first outer end cover 122 may be detachably connected to the box body 1 through a snap connection, a threaded connection, or a hinged connection. However, the detachable connection is not limited thereto.

According to some embodiments of the present disclosure, as shown in FIG. 2 and FIG. 12, the second end cover assembly 13 comprises a wire connection member 133, at least one of a power wire 25 and a communication wire 26 of the battery management system 2 is electrically connected to the wire connection member 133, and the wire connection member 133 is configured to be electrically connected to an external cable. The wire connection member 133 may guide the power wire 25 and the communication wire 26, so that the power wire 25 and the communication wire 26 can be electrically connected to an external cable through the wire connection member 133.

Further, the second end cover assembly 13 comprises a second inner end cover 131, the second inner end cover 131 is detachably connected to the box body 1, the wire connection member 133 is arranged on the second inner end cover 131, the second end cover assembly 13 further comprises a second outer end cover 132, the second outer end cover 132 is detachably connected to the second inner end cover 131, the second outer end cover 132 and the second inner end cover 131 define a second space, and the wire connection member 133 is arranged in the second space. Through this arrangement, the second inner end cover 131 and the second outer end cover 132 may protect the wire connection member 133, to prevent the wire connection member 133 from being damaged. In addition, the second inner end cover 131 and the second outer end cover 132 are detachably connected, to facilitate detachment of the energy storage device 100, so that the energy storage device 100 can be maintained.

When the first inner end cover 121 closes the opening 11 at one end of the box body 1, the switch 8 is arranged on the first inner end cover 121 and communicates with the battery management system 2, the second inner end cover 131 is connected to one end of the battery management system 2, and the second inner end cover 131 closes the opening 11 at the other end of the box body 1. The power wire 25 and the communication wire 26 of the battery management system 2 may pass through the second inner end cover 131 and are connected to the wire connection member 133. Therefore, functions of the first inner end cover 121 and the second inner end cover 131 are different. During mounting, the first inner end cover 121 and the second inner end cover 131 can be prevented from being mounted reversely, thereby improving assembly efficiency. By arranging the switch 8, the power wire 25, and the communication wire 26 at two ends of the box body 1, arrangement of wire harnesses in the box body 1 can be reduced, so that the wire harnesses in the box body 1 can be arranged regularly, and costs of the energy storage device 100 can be reduced.

According to some embodiments of the present disclosure, as shown in FIG. 1, a surface area of a surface of the box body 1 in the left-right direction is less than a surface area of a surface in any remaining direction. Therefore, the size of the energy storage device 100 in the horizontal direction is large, which facilitates mounting of the energy storage device 100 on the wall.

According to some embodiments of the present disclosure, the box body 1 comprises a plurality of side walls, and a chamfer or a round is provided at a joint between two adjacent side walls. Referring to FIG. 1, the box body 1 comprises four side walls, the four side walls are sequentially connected end to end, and a chamfer is provided at a joint between two adjacent side walls, so that the box body 1 is in a diamond-cut shape, to make the appearance of the energy storage device 100 more aesthetic.

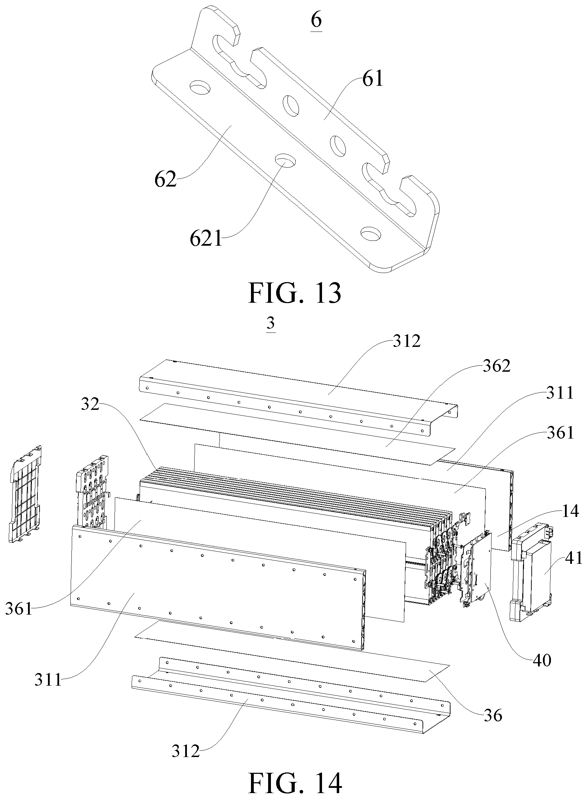

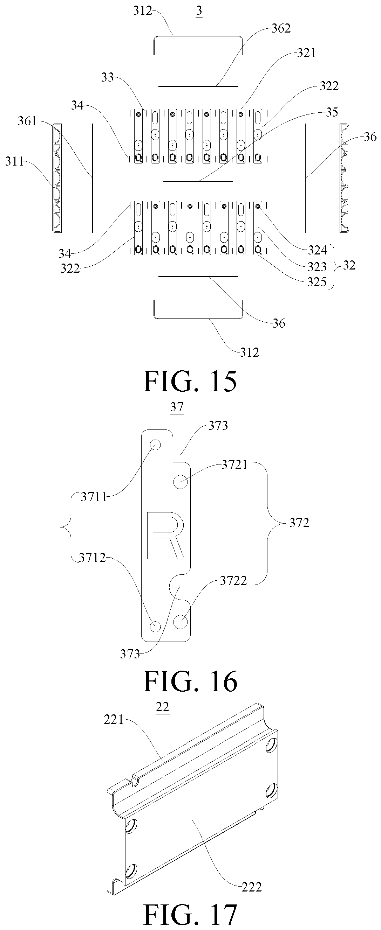

According to some embodiments of the present disclosure, at least one first separation member 33 is arranged between two adjacent battery cores 321, the two adjacent battery cores 321 are separated by the first separation member 33, and a width of the first separation member 33 is less than a width of the battery core 321. As shown in FIG. 14 and FIG. 15, there may be one first separation member 33. The first separation member 33 extends in the length direction of the battery core 321, and the first separation member 33 may space two adjacent battery cores 321 apart from each other, that is, the two adjacent battery cores 321 are spaced apart from each other by the first separation member 33. The width of the first separation member 33 is less than the width of the battery core 321, so that two adjacent battery cores 321 and the first separation member 33 can define a heat dissipation channel. The heat dissipation channel can dissipate heat generated during use of the energy storage device 100, to increase a heat dissipation rate of the energy storage device 100, thereby maintaining high performance of the energy storage device 100, avoiding a case that explosion or spontaneous combustion occurs in the energy storage device 100 when heat dissipation is not in time, and improving use safety of the energy storage device 100. In addition, the heat dissipation channel for heat dissipation has a simple structure, which facilitates control of costs of the energy storage device 100, and facilitates a miniaturization design of the energy storage device 100.

Further, a thickness of the first separation member 33 is w, where w satisfies: 0.1 mm ≤ w ≤ 1 mm. For example, W = 0.5 mm. A surface of the first separation member 33 may be provided with an adhesive, to be connected to the battery core 321 by bonding. A thickness of the first separation member 33 may be selected according to a size of the battery module 3 and a width of the heat dissipation channel designed to achieve a heat dissipation effect. Therefore, by limiting the width of the first separation member 33, the first separation member 33 can be matched with the heat dissipation channel, thereby reducing the volume of the battery module 3 while satisfying heat dissipation, and avoiding a case that the width of the first separation member 33 is small and the heat dissipation effect of the heat dissipation channel is undesirable, or a case that the width of the first separation member 33 is large, a circulating effect of air in the heat dissipation channel is undesirable, the heat dissipation capability is reduced, and the volume of the battery module 3 is easily increased, which is not conducive to the miniaturization design of the energy storage device 100.

According to some other embodiments of the present disclosure, referring to FIG. 15, a plurality of first separation members 33 are arranged between two adj acent battery cores 321, the plurality of first separation members 33 are spaced apart in the up-down direction, and each first separation member 33 extends in the left-right direction. In this case, a heat dissipation channel is defined between the plurality of first separation members 33 and between the adjacent battery cores 321, and the heat dissipation channel extends in the length direction of the battery core 321, and the first separation member 33 may be in complete contact with the battery core 321, so that the battery core 321 better dissipates heat. The quantity of first separation members 33 may be selected according to a requirement of the designed energy storage device 100. Therefore, a plurality of first separation members 33 are arranged between two adjacent battery cores 321, which facilitates formation of a heat dissipation channel and increases physical isolation between battery cores 321, thereby avoiding a case that the two adjacent battery cores 321 are in contact to cause a partial short circuit of the energy storage device 100, affect normal use of the battery core group 32, and reduce operating efficiency of the energy storage device 100.

Optionally, as shown in FIG. 15, two first separation members 33 are arranged between two adjacent battery cores 321, and the two first separation members 33 are respectively located on two sides of the battery core 321 in the width direction. Surfaces of the two first separation members 33 away from each other are flush with two opposite surfaces of the battery core 321 in the width direction, and the two first separation members 33 are spaced apart from each other. The two first separation members 33 and the two battery cores 321 may define a heat dissipation channel. Therefore, two first separation members 33 are arranged between two adjacent battery cores 321, and the two first separation members 33 are on two sides of the battery core 321 in the width direction, which can facilitate formation of a heat dissipation channel, improve stability of mounting between the two adjacent battery cores 321, and facilitate a lightening and thinning design of the battery module 3.

According to some embodiments of the present disclosure, an outer surface of each battery core 321 is provided with a protective layer. In one aspect, the protective layer may protect the battery core 321, to separate a housing of the battery core 321 from external air, to prevent the housing of the battery core 321 from being oxidized or corroded by the external air, thereby prolonging the service life of the battery core 321. In the other aspect, the protective layer may play an insulation role, to prevent a short circuit from occurring between two adjacent battery cores 321, ensure normal operation of the battery cores 321, avoid leakage of the battery cores 321, and improve use safety of the energy storage device 100. It should be noted that the protective layer arranged on the outer surface of the battery core 321 is generally a protective layer arranged on the battery core 321 during production, and the protective layer is only a thin layer.

According to some embodiments of the present disclosure, referring to FIG. 14 and FIG. 15, an outermost battery core 321 in the battery core group 32 is a first battery core 322, at least one second separation member 34 is arranged between the first battery core 322 and an inner wall of the box body 1, the first battery core 322 is separated from the inner wall of the box body 1 by the second separation member 34, and a width of the second separation member 34 is less than the width of the battery core 321. An adhesive may be arranged on a side of the second separation member 34 facing the battery core 321, so that the second separation member 34 can be connected to the first battery core 322, and connection reliability is high. The first battery core 322 is separated from the inner wall of the box body 1 by the second separation member 34 to define a heat dissipation channel. In a thickness direction of the battery core 321, the heat dissipation channel is arranged on a side of the first battery core 322 adjacent to the inner wall of the box body 1. Therefore, the second separation member 34 is arranged between the first battery core 322 and the inner wall of the box body 1, and the width of the second separation member 34 is less than the width of the battery core 321, so that the second separation member 34 defines a heat dissipation channel with the first battery core 322 and the inner wall of the box body 1, thereby improving a heat dissipation effect of the battery core 321.

Optionally, referring to FIG. 14 and FIG. 15, there are a plurality of second separation members 34, the plurality of second separation members 34 are spaced apart from each other in the width direction of the battery core 321, and each second separation member 34 extends in the length direction of the battery core 321. For example, there are two second separation members 34, the two second separation members 34 are distributed in the width direction of the battery core 321 on a side of the first battery core 322 adjacent to the inner wall of the box body 1, and a length of the second separation member 34 in the length direction of the battery core 321 is equal to the length of the battery core 321. Therefore, a plurality of second separation members 34 are arranged, which can improve stability of the connection between the first battery core 322 and the inner wall of the box body 1, ensure structural reliability of the defined heat dissipation channel, and improve heat dissipation of the first battery core 322.

According to some embodiments of the present disclosure, a width of the second separation member 34 in the width direction of the battery core 321 is H₁, and a width of the battery core 321 is H₂, where H₁ and H₂ satisfy: H₁/H₂ ≤ 1/5. When H₁/H₂ > 1/5, the width of the second separation member 34 in the width direction of the battery core 321 is large, thereby reducing a contact area between the battery core 321 and air, and further affecting heat dissipation efficiency of the battery core 321. Therefore, by causing H₁ and H₂ to satisfy: H₁/H₂ ≤ 1/5, while it is ensured that two adjacent battery cores 321 are insulated from each other, a contact area between the battery core 321 and air can be ensured, and therefore the heat dissipation efficiency of the battery core 321 can be improved.

According to some embodiments of the present disclosure, as shown in FIG. 15, a first insulation member 35 is arranged between two adjacent battery core groups 32. The first insulation member 35 may extend in the length direction of the battery core 321. The first insulation member 35 may cover opposite surfaces between the two battery core groups 32, so that the two adjacent battery core groups 32 are completely separated from each other. Therefore, the first insulation member 35 is arranged between the two adjacent battery core groups 32, and the first insulation member 35 may separate the two battery core groups 32 from each other, to prevent the two battery core groups 32 from affecting each other, improve insulation between the battery core groups 32, and help increase heat dissipation of the battery core groups 32, thereby reducing impact of a high temperature on performance of the energy storage device 100.

According to some embodiments of the present disclosure, referring to FIG. 15, at least one second insulation member 36 is arranged between an outer surface of the battery module 3 and the inner wall of the box body 1, the second insulation member 36 may extend in the length direction of the battery core 321, and the outer surface of the battery module 3 is separated from the inner wall of the box body 1 by the second insulation member 36. Therefore, the arrangement of the second insulation member 36 between the outer surface of the battery module 3 and the inner wall of the box body 1 can facilitate heat dissipation of the two battery core groups 32, and increase a heat dissipation rate. In addition, the second insulation member 36 can further separate the battery module 3 from the box body 1, and has a good insulation effect, to prevent the box body 1 from being energized and affecting use of the user, thereby improving use safety of the energy storage device 100.

Further, as shown in FIG. 14 and FIG. 15, the module housing 31 comprises two first side plates 311 and two second side plates 312. The two first side plates 311 are spaced apart from each other, and the two first side plates 311 are located on a front side and a rear side of the battery module 3. The two second side plates 312 are spaced apart from each other, the two second side plates 312 are located on an upper side and a lower side of the battery module 3, the two second side plates 312 and the two first side plates 311 jointly define a holding cavity, and the holding cavity is configured to accommodate the plurality of battery core groups 32. The first side plate 311 may be of a flat plate structure, first through-holes are provided on an edge of the flat plate structure, the second side plate 312 is formed with folded edges, and second through-holes are provided on the folded edges. When the two first side plates 311 and the two second side plates 312 are sequentially connected, the two first side plates 311 are opposite to each other, the two second side plates 312 are opposite to each other, and the first through-holes and the second through-holes are opposite to each other for fasteners to perform fixing. Alternatively, folded edges of the first side plates 311 and the second side plates 312 are opposite to each other in the thickness direction of the battery core 321, and may be bonded by using an adhesive, so that the holding cavity defined by the first side plates 311 and the second side plates 312 is structurally stable.

The second insulation member 36 is arranged between the outer surface of the battery module 3 and the first side plates 311 and/or the second side plates 312. In other words, the second insulation member 36 may be arranged between the battery module 3 and the first side plates 311, so that the first side plate 311 is separated from the battery module 3; or the second insulation member 36 may be arranged between the battery module 3 and the second side plates 312, so that the second side plate 312 is separated from the battery module 3; or the second insulation member 36 may be arranged between the first side plates 311, the second side plates 312, and the battery module 3, that is, the second insulation member 36 covers the battery module 3 on the outer surface of the battery module 3.

Therefore, the module housing 31 comprises the two first side plates 311 and the two second side plates 312 that are sequentially connected, and the second insulation member 36 is arranged between the first side plates 311, the second side plates 312, and the battery module 3, to protect the battery module 3, and improve insulation and heat dissipation of the battery module 3, so that the energy storage device 100 has good safety.

Further, with reference to FIG. 14 and FIG. 15, there are a plurality of second insulation members 36, and the plurality of second insulation members 36 comprise a plurality of first insulation sub-members 361 and a plurality of second insulation sub-members 362. Four second insulation members 36 are used as an example for description herein. Two second insulation members 36 opposite to each other in the width direction of the battery core 321 are second insulation sub-members 362, two second insulation members 36 opposite to each other in the thickness direction of the battery core 321 are first insulation sub-members 361, and there are two first insulation sub-members 361 and two second insulation sub-members 362. At least one first insulation sub-member 361 is arranged on the first side plate 311 and a surface of the battery module 3 opposite to the first side plate 311. At least one second insulation sub-member 362 is arranged on the second side plate 312 and a surface of the battery module 3 opposite to the second side plate 312. That is, the first insulation sub-member 361 and the second insulation sub-member 362 may be respectively connected to sides of the first side plate 311 and the second side plate 312 adjacent to the inner wall of the box body 1, and the first insulation sub-member 361 and the second insulation sub-member 362 may be connected to the corresponding first side plate 311 and second side plate 312 through bonding, screw connection, or the like. Therefore, a plurality of second insulation members 36 can effectively dissipate heat for the battery cores 321 in the battery core group 32, thereby ensuring performance of the energy storage device 100, avoiding contact between the battery module 3 and the box body 1, and reducing a possibility that the box body 1 is energized. The first insulation sub-member 361 and the second insulation sub-member 362 may be arranged on side surfaces that are of the first side plate 311 and the second side plate 312 and that face the battery core group 32.

According to some embodiments of the present disclosure, a thickness of the second insulation member 36 in the thickness direction of the battery core 321 is t₁, where t₁ satisfies: 0.1 mm ≤ t₁ ≤ 1 mm. When t₁ < 0.1 mm, the thickness of the second insulation member 36 in the thickness direction of the battery core 321 is small. In this case, a breakdown voltage of the second insulation member 36 is small. When the battery core 321 leaks, a current may break down the second insulation member 36, causing leakage of the battery core 321. When t₁ > 1 mm, the thickness of the second insulation member 36 in the thickness direction of the battery core 321 is large. Although the breakdown voltage of the second insulation member 36 is large, the thickness of the battery core group 32 is increased, which is not conducive to the miniaturization design of the battery module 3. Therefore, when t₁ satisfies 0.1 mm ≤ t₁ ≤ 1 mm, leakage caused by breakdown of the second insulation member 36 can be avoided, and the miniaturization design of the battery core group 32 is facilitated.

Each of the first separation member 33, the second separation member 34, the first insulation member 35, and the second insulation member 36 is an insulating heat dissipation member. Therefore, in one aspect, the first separation member 33, the second separation member 34, and the battery core 321 define a heat dissipation channel, to improve heat dissipation in the battery core group 32; and in the other aspect, the first separation member 33, the second separation member 34, the first insulation member 35, and the second insulation member 36 have an insulation function, so that there is insulation between two adjacent battery cores 321, between two adjacent battery core groups 32, and between a battery core group 32 and the inner wall of the box body 1.

In some other embodiments, the energy storage device 100 further comprises: a first fan and a second fan (not shown). The first fan is arranged in the box body 1, the second fan is arranged in the box body 1, and the first fan and the second fan are respectively located at two ends of the heat dissipation channel. For example, the first fan may blow air into the battery core group 32, to increase a flow rate of the air inside the energy storage device 100, and increase heat loss. The second fan may suck air from the battery core group 32, to increase a speed of the air flowing out from the energy storage device 100, and may also increase heat loss of the internal battery core 321. Alternatively, in the length direction of the battery core 321, the first fan and the second fan are distributed in a staggered manner, and both the first fan and the second fan can implement air blowing and air suction, thereby improving a heat dissipation capability of the battery core 321. Therefore, the arrangement of the first fan and the second fan at the two ends of the heat dissipation channel can increase the flow rate of the air in the heat dissipation air channel, to make it convenient to quickly take the heat of the battery core 321 away, and can increase the heat dissipation capability of the energy storage device 100, to make it convenient for the energy storage device 100 to maintain good performance.

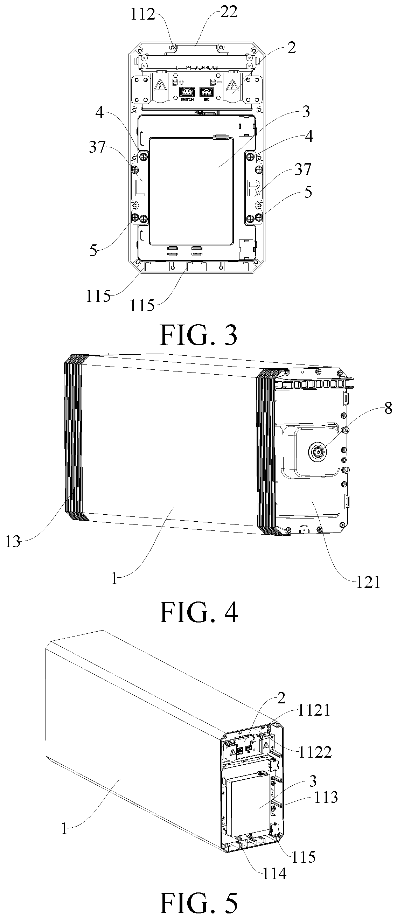

According to some embodiments of the present disclosure, as shown in FIG. 2 and FIG. 3, at least one connection sheet 37 is connected between a side surface of the battery module 3 adjacent to the opening 11 and the box body 1. In other words, the connection sheet 37 is arranged between the battery module 3 and the box body 1, one side of the connection sheet 37 is connected to an end portion of the battery module 3 in the length direction, and the other side of the connection sheet 37 is connected to an inner wall of the box body 1 in the thickness direction. Through this arrangement, it is convenient to fix the battery module 3 to the box body 1, thereby increasing the stability of the battery module 3. The connection sheet 37 has a simple structure, so that use of consumable materials can be reduced, and production costs of the connection sheet 37 can be reduced. In addition, because the connection sheet 37 is connected to a side surface of the box body 1, replacement of the connection sheet 37 after deformation is facilitated, thereby increasing convenience of connection of the connection sheet 37 and safety during replacement of the connection sheet 37.

Further, as shown in FIG. 16, the connection sheet 37 comprises a first side and a second side in the up-down direction of the box body 1, the first side is connected to the side surface of the battery module 3 adjacent to the opening 11, the second side is connected to the box body 1, and a length of the first side in the up-down direction of the box body 1 is greater than a length of the second side in the up-down direction of the box body 1. The length of the first side and the length of the second side are not specifically limited herein. During actual use, the length of the first side and the length of the second side may be set according to specific positions of the box body 1 and the battery module 3 connected to the first side and the second side, so that the connection sheet 37 can better connect the box body 1 and the battery module 3. Therefore, the length of the first side is greater than the length of the second side, which facilitates connection between the connection sheet 37 and the side surface of the battery module 3, increases a connection area between the first side and the battery module 3, relieves stress transfer on the first side, and improves stability of the connection between the battery module 3 and the box body 1.

In some embodiments, referring to FIG. 3 and FIG. 16, a plurality of first connection holes 371 are formed on the first side, and the plurality of first connection holes 371 are spaced apart in the up-down direction of the box body 1. An example in which there are two first connection holes 371 is used for description herein. The two first connection holes 371 are arranged adjacent to two ends of the connection sheet 37 in the width direction of the box body 1. The energy storage device 100 further comprises a plurality of first fasteners 4. The plurality of first fasteners 4 respectively pass through the plurality of first connection holes 371 to connect the connection sheet 37 to the battery module 3. Therefore, the first connection hole 371 is provided on the first side, so that the first connection hole 371 is matched with the first fastener 4, to connect the connection sheet 37 to the side surface of the battery module 3. The connection manner is simple, and can facilitate detachment, which is conducive to reducing maintenance costs, and mounting efficiency is high.

Further, referring to FIG. 3, FIG. 16, and FIG. 18, a plurality of second connection holes 372 are formed on the second side, and the plurality of second connection holes 372 are spaced apart in the up-down direction of the box body 1. A plurality of connection structures 111 are arranged on an inner wall of the accommodating cavity, and the connection structures 111 may be formed by protruding from a side of the inner wall of the box body 1 toward the center of the box body 1. Alternatively, the connection structures 111 may be directly welded on the inner wall of the box body 1, and the plurality of connection structures 111 are spaced apart in the up-down direction of the box body 1. The energy storage device 100 further comprises a plurality of second fasteners 5. The plurality of second fasteners 5 respectively pass through the plurality of second connection holes 372, and the plurality of second fasteners 5 are respectively connected to the plurality of connection structures 111. Therefore, the second fastener 5 passes through the second connection hole 372 and the connection structure 111, to connect the second side to the box body 1. The connection structure 111 arranged in the box body 1 facilitates fixing of the second fastener 5, and facilitates an increase in abutting against the connection sheet 37 in the length direction of the box body 1, thereby increasing reliability of the connection between the connection sheet 37 and the box body 1.

Furthermore, as shown in FIG. 16, the plurality of second connection holes 372 are respectively located at two ends of the second side in the up-down direction of the box body 1. Therefore, the plurality of second connection holes 372 are provided at two ends of the second side in the width direction of the box body 1, which can facilitate stress distribution on the entire second side, indicating that a distance between two second connection holes 372 is small, thereby reducing local excessive stress of the connection sheet 37 to prevent the connection sheet 37 from breaking, and increasing reliability of connecting the connection sheet 37 to the box body 1.

According to some specific embodiments of the present disclosure, as shown in FIG. 16, the plurality of first connection holes 371 comprise a first connection sub-hole 3711 and a second connection sub-hole 3712, and the first connection sub-hole 3711 and the second connection sub-hole 3712 are respectively located at two ends of the first side in the up-down direction of the box body 1. The plurality of second connection holes 372 comprise a third connection sub-hole 3721 and a fourth connection sub-hole 3722, the third connection sub-hole 3721 and the fourth connection sub-hole 3722 are respectively located at two ends of the second side in the up-down direction of the box body 1, the third connection sub-hole 3721 and the first connection sub-hole 3711 are located at one end of the connection sheet 37 in a length direction, and the fourth connection sub-hole 3722 and the second connection sub-hole 3712 are located at the other end of the connection sheet 37 in the length direction. A distance between the third connection sub-hole 3721 and the first connection sub-hole 3711 is greater than a distance between the fourth connection sub-hole 3722 and the second connection sub-hole 3712. The first connection sub-hole 3711 and the third connection sub-hole 3721 are located above the second connection sub-hole 3712 and the fourth connection sub-hole 3722.

It may be understood that the first side and the second side of the connection sheet 37 are respectively connected to the side surface of the battery module 3 and the box body 1. When the energy storage device 100 is subject to an external force, the box body 1 and the internal battery module 3 vibrate, and there is force transfer between the two sides of the connection sheet 37 by screwing the fasteners. When a specific torque is applied, a larger distance between the first connection sub-hole 3711 and the opposite third connection sub-hole 3721 and a larger distance between the second connection sub-hole 3712 and the fourth connection sub-hole 3722 on the connection sheet 37 indicate a smaller force to be transferred between the box body 1 and the battery module 3. In addition, subject to a limitation on a mounting position of the connection sheet 37 on the battery module 3, a distance between the first connection sub-hole 3711 and the third connection sub-hole 3721 is greater than a distance between the second connection sub-hole 3712 and the fourth connection sub-hole 3722, so as to increase utilization of the space on the side surface of the battery module 3.

In an actual application process, if the space at the joint between the battery module 3 and the box body 1 permits, a distance between the first connection sub-hole 3711 and the third connection sub-hole 3721 may be equal to a distance between the second connection sub-hole 3712 and the fourth connection sub-hole 3722. Therefore, the distance between the third sub-connector and the first sub-connector is greater than the distance between the fourth sub-connector and the second sub-connector, and the structure of the connection sheet 37 is fully used, so that the connection sheet 37 connects the box body 1 and the battery module 3 to improve the mounting stability of the battery module 3, and a force to which the connection sheet 37 is subject is reduced, thereby prolonging the service life of the connection sheet 37, and avoiding a case that the connection sheet 37 is stressed, twisted, and deformed to reduce the mounting stability of the battery module 3.

Further, as shown in FIG. 16, a distance between the third connection sub-hole 3721 and the fourth connection sub-hole 3722 is greater than a distance between the first connection sub-hole 3711 and the second connection sub-hole 3712. Because the battery module 3 has large mass, when the energy storage device 100 is subject to a force, the force is often transferred from the battery module 3 to the box body 1. To enable the battery module 3 to have high stability relative to the box body 1, in a thickness direction of the box body 1 and in a direction from the first side to the second side of the connection sheet 37, a distance between the third connection sub-hole 3721 and the fourth connection sub-hole 3722 is less than a distance between the first connection sub-hole 3711 and the second connection sub-hole 3712, to reduce transfer of the force between the battery module 3 and the box body 1 through the connection sheet 37, thereby increasing stability of the battery module 3 relative to the box body 1.

For example, a connecting line between the center of the first connection sub-hole 3711 and the center of the third connection sub-hole 3721 is a first connecting line, and a connecting line between the center of the second connection sub-hole 3712 and the center of the fourth connection sub-hole 3722 is a second connecting line. In a direction from the second side to the first side, a distance between the first connecting line and the second connecting line gradually increases. Therefore, the first connection sub-hole 3711, the second connection sub-hole 3712, the third connection sub-hole 3721, and the fourth connection sub-hole 3722 are respectively matched by screwing the fasteners, and the distance between the first connecting line and the second connecting line gradually increases, so that the first connecting line and the second connecting line are fixed approximately triangularly, which can increase stability of connecting the battery module 3 to the box body 1 by the connection sheet 37.

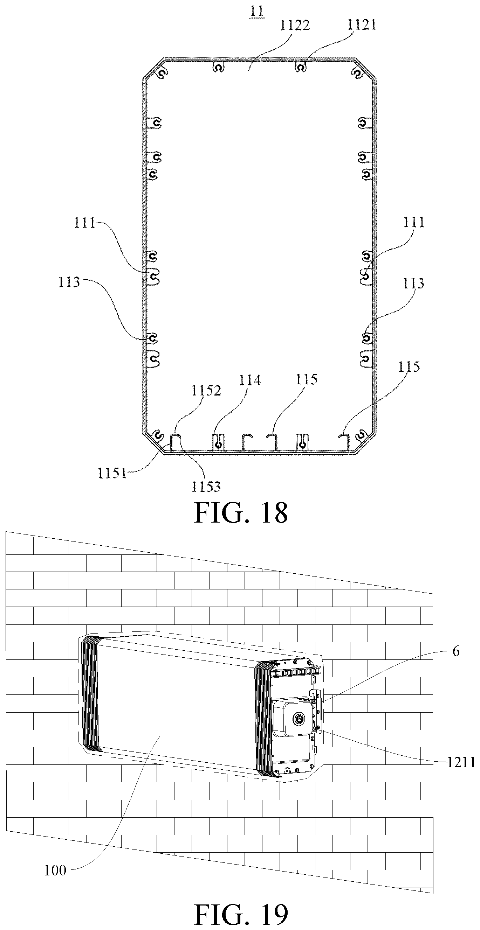

According to some embodiments of the present disclosure, referring to FIG. 3 and FIG. 18, the battery module 3 and the battery management system 2 are spaced apart from each other, a plurality of anti-collision structures 112 are arranged on at least one of the outer surface of the battery module 3 and the inner wall of the box body 1, and the outer surface of the battery module 3 is spaced apart from the inner wall of the box body 1 by the plurality of anti-collision structures 112. In other words, the anti-collision structures 112 may be arranged on the outer surface of the battery module 3. Alternatively, the anti-collision structures 112 are arranged on the inner wall of the box body 1. An example in which the anti-collision structure 112 is arranged on the inner wall of the box body 1 is used for description herein. The anti-collision structure 112 spaces the battery module 3 apart from the inner wall of the box body 1, so that the battery module 3 is not in direct contact with the inner wall of the box body 1.

Therefore, the protection of the battery module 3 by the box body 1 can be increased. When the box body 1 is subject to an external force and collides with the external force, the anti-collision structure 112 can increase the structural strength of the box body 1. In addition, because the anti-collision structure 112 is arranged to enable the box body 1 to have a deformation space when a certain deformation occurs, a part of the box body 1 after deformation is prevented from abutting against the battery module 3 to damage the battery module 3, thereby increasing the protection of the battery module 3 in the box body 1, and reducing losses caused by, for example, collision during transportation.

Further, as shown in FIG. 18, the plurality of anti-collision structures 112 are arranged on the inner wall of the box body 1, the plurality of anti-collision structures 112 are spaced apart from each other in a circumferential direction of the box body 1, each anti-collision structure 112 extends in the left-right direction of the box body 1. Therefore, the plurality of anti-collision structures 112 are spaced apart on the inner wall of the box body 1 and may extend in the length direction of the box body 1, to increase a contact area between the anti-collision structures 112 and the box body 1, thereby increasing structural strength of a plurality of inner walls of the box body 1, so that the anti-collision structures 112 can protect the internal battery module 3 from a plurality of directions, and prolong the service life of the battery module 3.

With reference to FIG. 18, a through-hole penetrating in the left-right direction of the box body 1 is formed on each anti-collision structure 112. The through-hole may form a structure that is closed in the circumferential direction of the box body 1 and that is open in the length direction of the box body 1, or a side of the through-hole facing the battery module 3 is open. For example, a side of the through-hole facing the battery module 3 is open. In this case, the cross-section of the through-hole may be C-shaped. Therefore, a side of the through-hole facing the battery module 3 is open, so that the through-hole can be deformed to a certain extent when being matched with the fasteners, to increase connection stability, and use of materials can be reduced, thereby reducing the weight of the energy storage device 100.

According to some embodiments of the present disclosure, referring to FIG. 3 and FIG. 18, the plurality of anti-collision structures 112 comprise a plurality of first anti-collision structures 1121. The plurality of first anti-collision structures 1121 are arranged adjacent to the battery management system 2, two adjacent first anti-collision structures 1121 are spaced apart in the front-rear direction of the box body 1 to define a first sliding slot 1122, and at least a part of the battery management system 2 is slidably matched in the first sliding slot 1122. The battery management system 2 may be mounted into the box body 1 along an end portion of the box body 1 in the length direction. Therefore, a first sliding slot 1122 is defined by two adjacent first anti-collision structures 1121, and the first sliding slot 1122 may be matched with a part of the battery management system 2, to mount the battery management system 2 and the box body 1. The first sliding slot 1122 has good directivity, which increases the mounting accuracy of the battery management system 2 and the battery module 3, and has high mounting reliability.

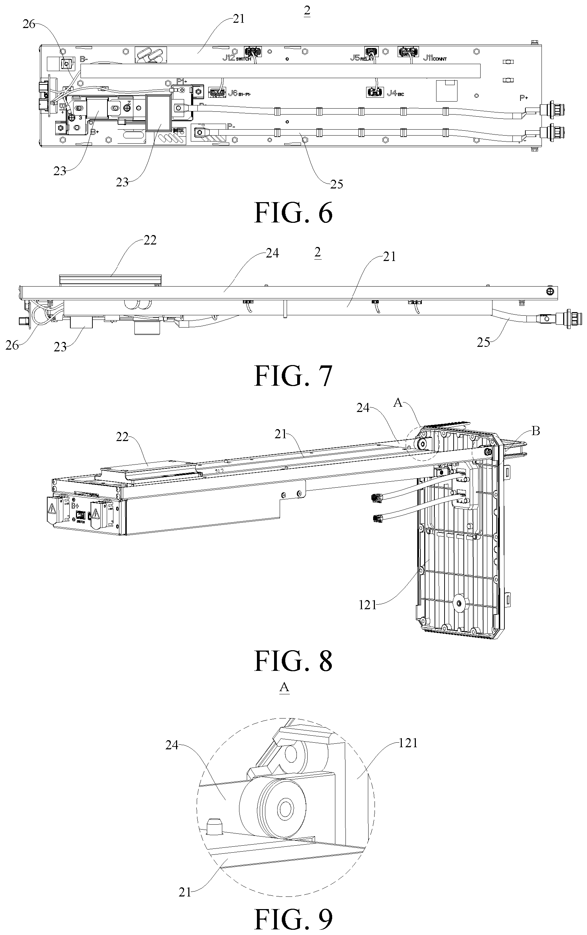

Further, referring to FIG. 18 and with reference to FIG. 6 and FIG. 7, the battery management system 2 comprises a plate body 21 and at least one heat dissipation plate 22, at least one electrical element 23 is arranged on a side of the plate body 21 adjacent to the battery module 3, the heat dissipation plate 22 is arranged on a side of the plate body 21 facing away from the electrical element 23, the heat dissipation plate 22 is at least opposite to the electrical element 23, and the heat dissipation plate 22 is slidably matched in the first sliding slot 1122. It may be understood that, in the width direction of the box body 1, the heat dissipation plate 22 and the electrical element 23 are respectively arranged on two sides of the plate body 21, the heat dissipation plate 22 is connected to the upper surface of the plate body 21, and a shape of a cross section of the heat dissipation plate 22 matches a shape of a cross section of the first sliding slot 1122, so that the plate body 21 can be connected to the box body 1 through the heat dissipation plate 22. A circuit plate and an electrical element 23 such as a detection element may be arranged on the battery management system 2, and may be configured to detect and control the switch 8 of the energy storage device 100 and perform detection during operation. Therefore, the plate body 21 is matched with the first sliding slot 1122 by using the heat dissipation plate 22, so that the battery management system 2 and the box body 1 are mounted, and the mounting manner has good reliability. In addition, the heat dissipation plate 22 has a high heat dissipation capability, and can transfer the temperature generated during operation of the energy storage device 100 to the box body 1, thereby improving the heat dissipation capability of the battery management system 2.

Furthermore, as shown in FIG. 17, the heat dissipation plate 22 comprises a first heat dissipation piece 221 and a second heat dissipation piece 222, and the first heat dissipation piece 221 is arranged on the plate body 21. The second heat dissipation piece 222 is connected to the first heat dissipation piece 221, the second heat dissipation piece 222 is located on a side of the first heat dissipation piece 221 away from the plate body 21, a width of the second heat dissipation piece 222 in the front-rear direction of the box body 1 is less than a width of the first heat dissipation piece 221 in the front-rear direction of the box body 1, and the second heat dissipation piece 222 is slidably matched in the first sliding slot 1122. In other words, the heat dissipation plate 22 comprises the second heat dissipation piece 222 connected to the box body 1 and the first heat dissipation piece 221 connected to the plate body 21, and the width of the second heat dissipation piece 222 is less than the width of the first heat dissipation piece 221, so that the second heat dissipation piece 222 is matched with the first sliding slot 1122. Therefore, the width of the second heat dissipation piece 222 is less than the width of the first heat dissipation piece 221, to facilitate matching between the second heat dissipation piece 222 and the first sliding slot 1122, and a connection area between the heat dissipation plate 22 and the plate body 21 is increased, to improve reliability of the connection between the heat dissipation plate 22 and the plate body 21, so that the battery management system 2 can be mounted in the box body 1 more stably.

In some embodiments, referring to FIG. 17, a cross-sectional area of the first heat dissipation piece 221 is greater than a cross-sectional area of the second heat dissipation piece 222. A shape of a cross section of the heat dissipation plate 22 in a length direction of the heat dissipation plate 22 is substantially an isosceles trapezoid. During mounting, the first heat dissipation piece 221 with a large area is attached to the plate body 21. Therefore, a contact area between the heat dissipation plate 22 and the plate body 21 can be increased, so that heat of the electrical element can be quickly transferred to the heat dissipation plate 22, thereby improving heat dissipation efficiency. In addition, the heat dissipation plate 22 has a simple structure, so that manufacturing costs can be reduced.

In some embodiments, as shown in FIG. 3, the heat dissipation plate 22 is in contact with the inner wall of the box body 1. After the electrical element 23 operates to generate heat, the electrical element 23 may transfer the heat to the heat dissipation plate 22 through the plate body 21, and then the heat dissipation plate 22 may exchange heat with another component such as the box body 1, to implement heat dissipation for the electrical element 23. Through this arrangement, the heat dissipation plate 22 is in contact with the inner wall of the box body 1, so that heat transfer efficiency between the heat dissipation plate 22 and the box body 1 can be improved, and heat dissipation efficiency can be improved.

In some embodiments, as shown in FIG. 18, the plurality of anti-collision structures 112 comprise a plurality of second anti-collision structures 113 and a plurality of third anti-collision structures 114. The plurality of second anti-collision structures 113 are respectively arranged on two side walls of the box body 1 in the front-rear direction, at least two of the second anti-collision structures 113 are arranged on each of the side walls, the at least two second anti-collision structures 113 are spaced apart in the up-down direction of the box body 1, and the plurality of second anti-collision structures 113 are respectively opposite to two side surfaces of the battery module 3 in the thickness direction of the box body 1. The plurality of third anti-collision structures 114 are arranged on a side of the box body 1 adjacent to the battery module 3 in the width direction, the plurality of third anti-collision structures 114 are spaced apart from each other in the front-rear direction of the box body 1, and a bottom surface of the battery module 3 is supported on the plurality of third anti-collision structures 114.

Therefore, the anti-collision structure 112 comprises the plurality of second anti-collision structures 113 and the plurality of third anti-collision structures 114, the plurality of second anti-collision structures 113 are arranged on a side that is of the side wall of the box body 1 in the width direction and that faces the battery module 3, the plurality of third anti-collision structures 114 are arranged on a side of the bottom of the box body 1 that faces the battery module 3, and the plurality of third anti-collision structures 114 can support the battery module 3, so that there is a gap between the battery module 3 and the box body 1, and a contact area between the battery module 3 and the box body 1 is reduced, thereby facilitating mounting of the battery module 3. The arrangement of the plurality of second anti-collision structures 113 on the side wall of the box body 1 can increase the limitation on the battery module 3 in the box body 1, so that the mounting stability of the battery module 3 is high.

Further, referring to FIG. 3 and FIG. 16, the energy storage device 100 further comprises at least one connection sheet 37. The connection sheet 37 comprises a first side and a second side in the up-down direction of the box body 1. The first side is connected to a side surface of the battery module 3 in the front-rear direction of the box body 1. The second side is connected to the second anti-collision structure 113. The connection sheet 37 is of a flat sheet structure. At least two through-holes are provided on the first side and the second side of the connection sheet 37. The through-hole on the first side is provided for a fastener to pass through to connect the connection sheet 37 to the battery module 3. The through-hole on the second side is provided for a fastener to pass through to connect the connection sheet 37 to the second anti-collision structure 113 on the side wall of the box body 1. The connection sheet 37 connects the battery module 3 and the box body 1 at an end portion of the battery module 3. It should be noted that, an end surface of the second anti-collision structure 113 connected to the second side of the connection sheet 37 may be lower than an end surface of another second anti-collision structure 113 adjacent to the second anti-collision structure, to increase utilization of the internal space of the box body 1. Therefore, the connection sheet 37 is arranged to connect the battery module 3 to the box body 1, thereby increasing the mounting stability of the battery module 3 and the box body 1. The connection sheet 37 has a simple structure, so that use of consumable materials can be reduced, and production costs of the energy storage device 100 can be reduced. In addition, because the connection sheet 37 is connected to a side surface of the box body 1, replacement of the connection sheet 37 after deformation is facilitated, thereby increasing convenience of connection of the connection sheet 37 and safety.

Furthermore, as shown in FIG. 16, at least one avoidance notch 373 is formed on the connection sheet 37, and the avoidance notch 373 is configured to avoid the second anti-collision structure 113. There may be two avoidance notches 373, and the two avoidance notches 373 may be located on the second side. Therefore, the avoidance notch 373 is provided on the connection sheet 37, so that when the connection sheet 37 connects the battery module 3 to the box body 1, other structures of the energy storage device 100 can be smoothly connected to an end portion of the battery module 3, thereby avoiding interference of the second anti-collision structure 113 to mounting of the connection sheet 37, and increasing utilization of space at the end portion of the battery module 3, so that the internal structure of the energy storage device 100 is more compact.

Optionally, the avoidance notch 373 is formed by recessing a part of an edge of the connection sheet 37 toward the center of the battery module 3. That is, in a direction from the second side of the connection sheet 37 to the first side, the edge of the second side is recessed to form the avoidance notch 373. Therefore, the avoidance notch 373 formed on the connection sheet 37 can avoid the anti-collision structure 112 arranged on the side surface of the box body 1, which facilitates the lightening and thinning design of the energy storage device 100 in the length direction of the box body 1.

In some embodiments, in a circumferential direction of the connection sheet 37, there is a smooth transition at corners of the connection sheet 37. Therefore, the smooth transition at the corners of the connection sheet 37 can reduce resistance experienced by the connection sheet 37 when the battery module 3 and the box body 1 move relative to each other in the thickness direction of the box body 1.

According to some embodiments of the present disclosure, as shown in FIG. 2, each battery core 321 comprises a battery core body 323, a plurality of terminals 324, and a battery core sampling plate 39, and the plurality of terminals 324 are respectively arranged at two ends of the battery core body 323. The energy storage device 100 further comprises a plurality of terminal guide plates 38. The plurality of terminal guide plates 38 are respectively in a one-to-one correspondence with the plurality of battery core groups 32, the terminal guide plate 38 is arranged on the battery module 3, the terminal guide plate 38 is located at one end of the plurality of battery cores 321, and the terminal guide plate 38 is electrically connected between terminals 324 at the one end of the plurality of battery cores 321 and housings 325 of the battery core bodies 323 of the plurality of battery cores 321; The battery core sampling plate 39 is arranged at the other end of the plurality of battery cores 321, and the battery core sampling plate 39 is electrically connected to at least the housings 325 of the plurality of battery cores 321.

For example, in the example in FIG. 2, each battery module 3 comprises two battery core groups 32, and there are two terminal guide plates 38. The two terminal guide plates 38 are located at one end of the battery core 321 in the length direction, and the two terminal guide plates 38 are arranged in the width direction of the battery core group 32. A plurality of battery cores 321 of each battery core group 32 may be connected in series through the terminal guide plate 38. Because the terminal guide plate 38 is connected between the terminal 324 of the battery core 321 and the housing 325 of the battery core body 323, the housing 325 and the terminal 324 at the one end are at a same potential, and the battery core sampling plate 39 located at the other end of the battery core 321 can collect a potential of the one end of the battery core 321 through the housing 325. When the battery core sampling plate 39 is connected to the other end of the battery core 321, a voltage of the battery core 321 can be collected. Therefore, compared with the conventional battery module 3, the battery module 3 of the energy storage device 100 of the present disclosure may be provided with a battery core sampling plate 39 to collect information such as a voltage and a temperature of the battery core 321, thereby reducing arrangement of wire harnesses, so that a structure of the battery module 3 is more regular, and costs of the battery module 3 can be reduced, thereby reducing costs of the energy storage device 100.

Further, the terminal guide plate 38 comprises a body 381, a plurality of first connection sheets 382, and a plurality of second connection sheets 383. The body 381 extends in an arrangement direction of the plurality of battery cores 321. The body 381 has a first side and a second side in a direction perpendicular to the arrangement direction. The plurality of first connection sheets 382 are spaced apart from each other and connected to the first side. The plurality of first connection sheets 382 are electrically connected to the terminals 324 at the one end of the plurality of battery cores 321 respectively. The plurality of second connection sheets 383 are spaced apart from each other and connected to the second side. The plurality of second connection sheets 383 are electrically connected to the housings 325 of the battery core bodies 323 of the plurality of battery cores 321 respectively. Referring to FIG. 2, there may be four first connection sheets 382 and four second connection sheets 383. The four first connection sheets 382 are evenly arranged along the first side of the body 381, the four second connection sheets 383 are evenly arranged along the second side of the body 381, and the first connection sheets 382 and the second connection sheets 383 are opposite to each other in the width direction of the body 381. During mounting, each first connection sheet 382 is welded to a terminal 324 at one end of a corresponding battery core 321, and each second connection sheet 383 is welded to a housing 325 of a battery core body 323. Therefore, the potential of the housing 325 of the battery core body 323 is the same as the potential of the one end of the battery core 321, so that the potential between two ends of the battery core 321 can be collected by using one battery core sampling plate 39, thereby reducing the quantity of battery core sampling plates 39 in the battery module 3.

Furthermore, the battery module 3 further comprises a collection plate 40. The collection plate 40 is arranged on a side of the battery core sampling plate 39 away from the battery module 3, at least one connector 401 is arranged on the collection plate 40, and the collection plate 40 is electrically connected to the battery core sampling plate 39 by the connector 401. For example, as shown in FIG. 2, a connector 401 is arranged on a side of the collection plate 40 adjacent to the battery core sampling plate 39. An electrical connection plug may be arranged on the battery core sampling plate 39. During mounting, the electrical connection plug is matched on the connector 401, to implement electrical connection between the collection plate 40 and the battery core sampling plate 39. Information such as a voltage and a temperature collected by the battery core sampling plate 39 from the battery core 321 is transferred to the collection plate 40. The collection plate 40 transfers the received information to the battery management system 2. The battery management system 2 controls the battery core 321 by analyzing the received information, to ensure normal operation of the battery core 321.

In some optional embodiments, referring to FIG. 2, the battery module 3 further comprises a protective cover 41. The protective cover 41 covers a side of the collection plate 40 away from the battery core sampling plate 39. The protective cover 41 protects the collection plate 40, to prevent the collection plate 40 from being injured during mounting and transportation. In addition, the protective cover 41 may close one end of the battery module 3, to prevent foreign objects from entering the battery core group 32 and causing damage to the battery core 321.

According to some embodiments of the present disclosure, referring to FIG. 6, FIG. 9, and FIG. 10, the battery management system 2 comprises a tray 24 and a plate body 21. The tray 24 is pivotably connected to the end cover assembly 12. Because no other component is mounted on the tray 24, interference of the threaded fasteners with other components during mounting can be avoided by pivotably connecting the tray 24 to the end cover assembly 12, thereby improving assembly efficiency. The plate body 21 is arranged on the tray 24, the power wire 25 and the communication wire 26 are arranged on the plate body 21, and the power wire 25 and the communication wire 26 are located on a side of the plate body 21 adjacent to the center of the box body 1. In other words, the power wire 25 and the communication wire 26 are located on a side of the plate body 21 adjacent to the battery module 3 in the thickness direction. The power wire 25 extends in the left-right direction of the box body 1. In addition, the power wire 25 may comprise a positive wire and a negative wire, and the positive wire and the negative wire may be respectively connected to a positive electrode and a negative electrode of the battery module 3 by copper bars or thick wires. Therefore, by arranging the power wire 25 and the communication wire 26 on the same side of the plate body 21, the thickness of the battery management system 2 can be reduced, so that the space occupied by the battery management system 2 in the box body 1 can be reduced, and the energy storage device 100 can be designed in miniature.

According to some embodiments of the present disclosure, as shown in FIG. 18, a plurality of guide rails 115 are arranged on a bottom wall of the box body 1, the plurality of guide rails 115 all extend in the left-right direction of the box body 1, and the plurality of guide rails 115 are spaced apart from each other in the front-rear direction of the box body 1. The battery module 3 is arranged in a push-pull manner in the box body 1 in the left-right direction of the box body 1, and the bottom surface of the battery module 3 is supported on the plurality of guide rails 115.

For example, in the examples of FIG. 3, FIG. 5, and FIG. 18, four guide rails 115 are arranged on the bottom wall of the box body 1, and the four guide rails 115 are spaced apart from each other in the thickness direction of the box body 1. During mounting, one end of the battery module 3 in the length direction is first matched in a mounting cavity of the box body 1, and the four guide rails 115 abut against the bottom surface of the battery module 3. Then, the battery module 3 is pushed inward in the length direction of the box body 1 until the battery module 3 is completely pushed into the box body 1. Therefore, a contact area between the box body 1 and the battery module 3 is reduced, so that frictional resistance between the box body 1 and the battery module 3 can be reduced, thereby avoiding wear on a coating of the battery module 3 and an inner surface of the box body 1, and the box body 1 can be prevented from rusting or leaking, thereby improving the use safety of the energy storage device 100. In addition, the battery module 3 can be quickly assembled into the box body 1, thereby improving the assembly efficiency of the energy storage device 100.

Further, as shown in FIG. 18, each guide rail 115 comprises a first connection segment 1151 and a second connection segment 1152. The first connection segment 1151 extends in the up-down direction of the box body 1, and one end of the first connection segment 1151 is connected to the bottom wall of the box body 1. The first connection segment 1151 extends in the front-rear direction of the box body 1, the second connection segment 1152 is connected to the other end of the first connection segment 1151, and the bottom surface of the battery module 3 is supported on the second connection segment 1152. Through this arrangement, in one aspect, a contact area between the guide rail 115 and the bottom surface of the box body 1 can be increased by using the second connection segment 1152, which can improve stability of the battery module 3 when being pushed into the box body 1. In the other aspect, the guide rail 115 can play a guide role, to ensure that the battery module 3 can be quickly assembled into the box body 1. In addition, the guide rail 115 and the top wall of the box body 1 can restrict movement of the battery module 3 in the width direction of the box body 1. In addition, the guide rail 115 has a simple structure, which facilitates machining.

Furthermore, as shown in FIG. 18, each guide rail 115 further comprises at least one third connection segment 1153. One end of the third connection segment 1153 is connected to a free end of the second connection segment 1152, and the other end of the third connection segment 1153 extends obliquely toward the bottom wall of the box body 1. Therefore, a sufficient contact area between the battery module 3 and the guide rail 115 is ensured, and the structural strength of the guide rail 115 can be enhanced.

In some optional embodiments, a sum of lengths of the second connection segment 1152 and the third connection segment 1153 is less than a length of the first connection segment 1151. Through this arrangement, the other end of the third connection segment 1153 can be prevented from coming into contact with the bottom wall of the box body 1, and material usage of the guide rail 115 can be reduced, thereby reducing costs of the box body 1.

In some optional embodiments, a top surface of at least one guide rail 115 is coated with a lubricant glue. Through this arrangement, friction resistance between the battery module 3 and the guide rail 115 can be further reduced, so that the battery module 3 can be quickly assembled into the box body 1.

Further, referring to FIG. 13 and FIG. 19, the energy storage device 100 further comprises a plurality of mounting ears 6. The plurality of mounting ears 6 are respectively arranged at a left end and a right end of the box body 1, the plurality of mounting ears 6 are respectively matched with the first end cover assembly 12 and the second end cover assembly 13, the first end cover assembly 12 and the second end cover assembly 13 are each provided with an accommodating space, the plurality of mounting ears 6 are hidden in the accommodating spaces, and the box body 1 is adapted to be connected to a wall by the plurality of mounting ears 6. Therefore, by arranging the plurality of mounting ears 6, the energy storage device 100 can be suspended from a wall, thereby improving utilization of indoor upper space. In addition, because the plurality of mounting ears 6 are hidden in the accommodating space, and front sides of the plurality of mounting ears 6 are blocked by the box body 1, the appearance of the energy storage device 100 looks more aesthetically pleasing, which plays a role in beautifying the home and also meets the aesthetic requirements of the user. In addition, the energy storage device 100 is connected to the wall through the plurality of mounting ears 6 at the left end and the right end, and the energy storage device 100 has a high protection level, may be used in a plurality of mounting scenarios, and is suitable for indoor mounting and outdoor mounting, thereby improving the universality of the energy storage device 100.

Furthermore, referring to FIG. 13 and FIG. 19, at least one suspension member 1211 is arranged on each end cover 121, each mounting ear 6 comprises a first mounting piece 61 and a second mounting piece 62, and the first mounting piece 61 is adapted to be connected to the wall. One end of the second mounting piece 62 is connected to the first mounting piece 61, the other end of the second mounting piece 62 extends toward the center of the accommodating space, at least one suspension hole 621 is formed on the second mounting piece 62, and the box body 1 is adapted to be mounted on the wall through matching between the suspension member 1211 and the suspension hole 621. Through this arrangement, the mounting ears 6 have a simple structure, which facilitates production and machining, so that costs can be reduced, and a mounting operation of the energy storage device 100 is simple. In addition, the mounting ears 6 occupy small space, which facilitates coverage of the mounting ears 6 by the energy storage device 100, so that the appearance of the energy storage device 100 looks more aesthetically pleasant.

According to some embodiments of the present disclosure, referring to FIG. 12, the energy storage device 100 further comprises a plurality of handles 7, and the plurality of handles 7 are respectively arranged on sides of the first end cover assembly 12 and the second end cover assembly 13 away from the box body 1. In other words, the handles 7 and the battery module 3 are arranged on two opposite sides of the end cover 121, so that the handles 7 are arranged outside the foregoing mounting space, to make it convenient for an operator to hold. A handle 7 and an end cover assembly (that is, the first end cover assembly 12 and the second end cover assembly 13) are an integrally formed member. Through this arrangement, in one aspect, there is no need to mount the handle 7 through additional components and additional operations, which reduces mounting costs of the handle 7 and simplifies the mounting operation of the handle 7. In the other aspect, the handle 7 and the end cover 121 are inseparable, so that the handle 7 and the end cover 121 are structurally stable. When the operator carries the energy storage device 100, especially an energy storage device 100 with a large volume or a large weight, the handle 7 is not separated from the energy storage device 100, to prevent the energy storage device 100 from falling off during the mounting, thereby avoiding damage to the energy storage device 100 and ensuring personal safety of the operator.

Optionally, the box body 1 is an aluminum alloy member.

According to some embodiments of the present disclosure, a length of the energy storage device 100 is L₁, a width of the energy storage device 100 is L₂, a height of the energy storage device 100 is L₃, and L₁, L₂, and L₃ respectively satisfy: 0 mm < L₁ ≤ 685 mm, 0 mm < L₂ ≤ 135 mm, and 0 mm < L₃ ≤ 185 mm. Therefore, by limiting dimensions of a length, a width, and a height of the energy storage device 100, to cause a size of the entire energy storage device 100 to be small, a size of the internal battery module 3 can be properly designed, to implement proper arrangement of the plurality of battery cores 321 and arrangement of the plurality of battery core groups 32.

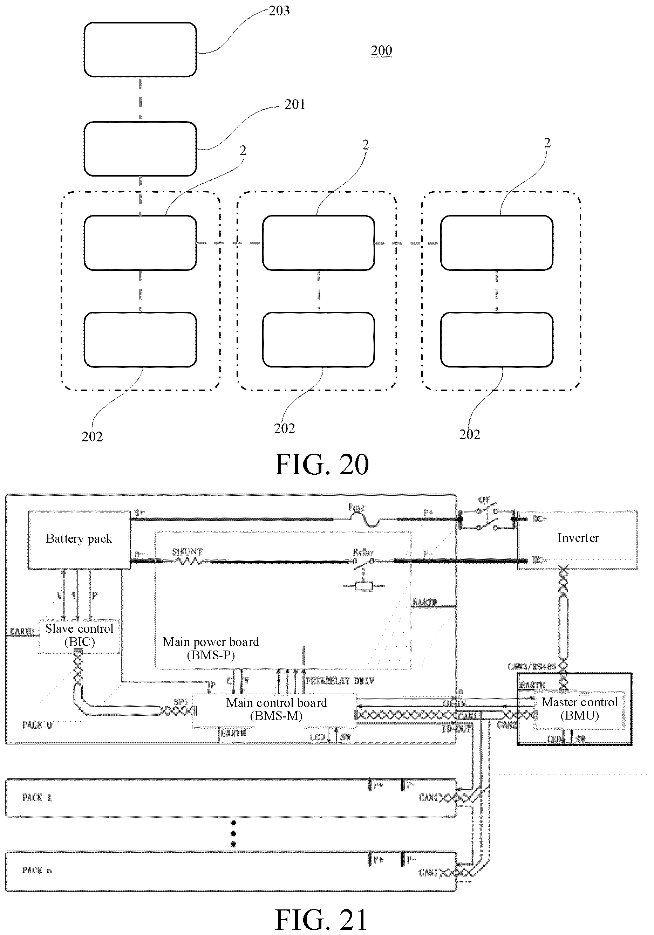

As shown in FIG. 20 and FIG. 21, an energy storage device control system 200 according to an embodiment of a second aspect of the present disclosure comprises a battery management unit (BMU) 201 and a plurality of energy storage devices 100. The plurality of energy storage devices 100 are connected in parallel, and each energy storage device 100 comprises a battery management system (BMS) 2. The battery management unit (BMU) 201 may be communicatively connected to the battery management system (BMS) 2 of each energy storage device 100 of the plurality of energy storage devices 100, for example, through a controller area network (CAN) bus.

The battery management unit (BMU) 201 in the present disclosure may be independently formed as a module, and may monitor states of the battery management systems (BMS) 2 in all the energy storage devices 100 connected in parallel, perform distributed control management on the battery management systems 2 (that is, perform independent control management on the battery management systems 2) through communication, and perform state of charge (SOC) balancing. Regardless of how many energy storage devices 100 are connected in parallel, only one total battery management unit (BMU) 201 may be used to control all the energy storage devices 100 connected in parallel, and costs are reduced.

Further, referring to FIG. 21, each energy storage device 100 further comprises a battery information collector (BIC) 202. The battery information collector (BIC) 202 is communicatively connected to a battery management system 2, for example, communicatively connected through a CAN bus. The BIC is mainly configured to collect battery data and transfer the battery data to the battery management system (BMS) 2. When an exception occurs in the battery data, the BMS may control a breaker (not shown) of a main circuit of a corresponding battery to be disconnected. When an entire system fails, the BMS receives a control instruction from the BMU, and performs a corresponding control action on the control instruction of the BMU, for example, controls relays of main circuits of all batteries to be disconnected.

Further, as shown in FIG. 21, the energy storage device control system 200 may further comprise an energy management system (EMS) 203 or an inverter. The energy management system 203 or the inverter is communicatively connected to the battery management unit 201, for example, communicatively connected through a CAN bus. The battery management unit 201 may transfer a basic status of the battery and the like to the EMS/inverter and receive a charge and discharge instruction from the EMS/inverter, thereby performing independent charge and discharge control on each BMS.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present disclosure. In this specification, schematic descriptions of the foregoing terms do not necessarily directed at a same embodiment or example. Moreover, the specific features, structures, materials, or characteristics described may be combined in any one or more embodiments or examples in an appropriate manner.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. An energy storage device (100), comprising:
a box body (1), two sides of the box body (1) in a left-right direction being provided with openings (11);
a first end cover assembly (12) and a second end cover assembly (13), the first end cover assembly (12) and the second end cover assembly (13) being respectively arranged on the two sides of the box body (1), the first end cover assembly (12) and the second end cover assembly (13) being both detachably connected to the box body (1), the first end cover assembly (12) and the second end cover assembly (13) being configured to close the openings (11), and the first end cover assembly (12), the second end cover assembly (13), and the box body (1) jointly defining an accommodating cavity;
a battery management system (2), the battery management system (2) being arranged in the accommodating cavity, and the battery management system (2) extending in the left-right direction; and
a battery module (3), the battery module (3) being arranged in the accommodating cavity, the battery module (3) and the battery management system (2) being arranged in an up-down direction, the battery module (3) comprising a module housing (31) and a plurality of battery core groups (32), the plurality of battery core groups (32) being arranged in the module housing (31), at least two of the battery core groups (32) being arranged in the up-down direction, each of the battery core groups (32) comprising a plurality of battery cores (321), the plurality of battery cores (321) being arranged side by side in a front-rear direction, and each of the battery cores (321) extending in the left-right direction,
wherein the battery module (3) and the battery management system (2) are removable from the accommodating cavity through the openings (11).

2. The energy storage device (100) according to claim 1, wherein both the first end cover assembly (12) and the second end cover assembly (13) are hermetically connected to the box body (1);
the first end cover assembly (12) comprises a first inner end cover (121), the first inner end cover (121) is detachably arranged at the opening (11), and the first inner end cover (121) closes the opening (11), a switch (8) is arranged on the first inner end cover (121), the switch (8) communicates with the battery management system (2), and the switch (8) is configured to control power-on and power-off of the energy storage device (100); and
the first end cover assembly (12) further comprises a first outer end cover (122), the first outer end cover (122) is detachably connected to the first inner end cover (121) and defines a first space together with the first inner end cover (121), and the switch (8) is arranged in the first space.

3. The energy storage device (100) according to claim 1 or 2, wherein the second end cover assembly (13) comprises a wire connection member (133), at least one of a power wire (25) and a communication wire (26) of the battery management system (2) is electrically connected to the wire connection member (133), and the wire connection member (133) is configured to be electrically connected to an external cable; and/or the second end cover assembly (13) comprises a second inner end cover (131), the second inner end cover (131) is detachably connected to the box body (1), the wire connection member (133) is arranged on the second inner end cover (131), the second end cover assembly (13) further comprises a second outer end cover (132), the second outer end cover (132) is detachably connected to the second inner end cover (131), the second outer end cover (132) and the second inner end cover (131) define a second space, and the wire connection member (133) is arranged in the second space.

4. The energy storage device (100) according to any one of claims 1 to 3, wherein at least one first separation member (33) is arranged between two adjacent battery cores (321), the two adjacent battery cores (321) are separated by the first separation member (33), and a width of the first separation member (33) is less than a width of the battery core (321); and a thickness of the first separation member (33) is w, wherein w satisfies: 0.1 mm ≤ w ≤ 1 mm.

5. The energy storage device (100) according to claim 4, wherein an outermost battery core (321) in the battery core group (32) is a first battery core (322), at least one second separation member (34) is arranged between the first battery core (322) and an inner wall of the box body (1), the first battery core (322) is separated from the inner wall of the box body (1) by the second separation member (34), and a width of the second separation member (34) is less than the width of the battery core (321).

6. The energy storage device (100) according to any one of claims 1 to 5, wherein a first insulation member (35) is arranged between two adjacent battery core groups (32); and
at least one second insulation member (36) is arranged between an outer surface of the battery module (3) and the inner wall of the box body (1), and the outer surface of the battery module (3) is separated from the inner wall of the box body (1) by the second insulation member (36).

7. The energy storage device (100) according to claim 6, wherein the module housing (31) comprises:
two first side plates (311), wherein the two first side plates (311) are spaced apart from each other, and the two first side plates (311) are respectively located on a front side and a rear side of the battery module (3); and
two second side plates (312), wherein the two second side plates (312) are spaced apart from each other, the two second side plates (312) are respectively located on an upper side and a lower side of the battery module (3), the two second side plates (312) and the two first side plates (311) jointly define a holding cavity, and the holding cavity is configured to accommodate the plurality of battery core groups (32); and
the second insulation member (36) is arranged between the outer surface of the battery module (3) and the first side plates (311) and/or the second side plates (312).

8. The energy storage device (100) according to claim 7, wherein a plurality of second insulation members (36) are provided, and the plurality of second insulation members (36) comprise:
a plurality of first insulation sub-members (361), wherein at least one of the first insulation sub-members (361) is arranged on the first side plate (311) and a surface of the battery module (3) opposite to the first side plate (311); and
a plurality of second insulation sub-members (362), wherein at least one of the second insulation sub-members (362) is arranged on the second side plate (312) and a surface of the battery module (3) opposite to the second side plate (312).

9. The energy storage device (100) according to any one of claims 1 to 8, wherein at least one connection sheet (37) is connected between a side surface of the battery module (3) adjacent to the opening (11) and the box body (1); and the connection sheet (37) comprises a first side and a second side in the up-down direction of the box body (1), the first side is connected to the side surface of the battery module (3) adjacent to the opening (11), the second side is connected to the box body (1), and a length of the first side in the up-down direction of the box body (1) is greater than a length of the second side in the up-down direction of the box body (1).

10. The energy storage device (100) according to claim 6, wherein a plurality of first connection holes (371) are formed on the first side, and the plurality of first connection holes (371) are spaced apart in the up-down direction of the box body (1);
the energy storage device (100) further comprises:
a plurality of first fasteners (4), wherein the plurality of first fasteners (4) respectively pass through the plurality of first connection holes (371) to connect the connection sheet (37) to the battery module (3);
a plurality of second connection holes (372) are formed on the second side, and the plurality of second connection holes (372) are spaced apart in the up-down direction of the box body (1);
a plurality of connection structures (111) are arranged on an inner wall of the accommodating cavity, and the plurality of connection structures (111) are spaced apart in the up-down direction of the box body (1); and
the energy storage device (100) further comprises:
a plurality of second fasteners (5), wherein the plurality of second fasteners (5) respectively pass through the plurality of second connection holes (372), and the plurality of second fasteners (5) are respectively connected to the plurality of connection structures (111).

11. The energy storage device (100) according to claim 10, wherein the plurality of first connection holes (371) comprise a first connection sub-hole (3711) and a second connection sub-hole (3712), and the first connection sub-hole (3711) and the second connection sub-hole (3712) are respectively located at two ends of the first side in the up-down direction of the box body (1);
the plurality of second connection holes (372) comprise a third connection sub-hole (3721) and a fourth connection sub-hole (3722), the third connection sub-hole (3721) and the fourth connection sub-hole (3722) are respectively located at two ends of the second side in the up-down direction of the box body (1), the third connection sub-hole (3721) and the first connection sub-hole (3711) are located at one end of the connection sheet (37) in a length direction, and the fourth connection sub-hole (3722) and the second connection sub-hole (3712) are located at the other end of the connection sheet (37) in the direction; and
a distance between the third connection sub-hole (3721) and the first connection sub-hole (3711) is greater than a distance between the fourth connection sub-hole (3722) and the second connection sub-hole (3712).

12. The energy storage device (100) according to any one of claims 1 to 11, wherein the battery module (3) and the battery management system (2) are spaced apart from each other, a plurality of anti-collision structures (112) are arranged on at least one of the outer surface of the battery module (3) and the inner wall of the box body (1), and the outer surface of the battery module (3) is spaced apart from the inner wall of the box body (1) by the plurality of anti-collision structures (112); and
the plurality of anti-collision structures (112) are arranged on the inner wall of the box body (1), the plurality of anti-collision structures (112) are spaced apart from each other in a circumferential direction of the box body (1), each of the anti-collision structures (112) extends in the left-right direction of the box body (1), a through-hole penetrating in the left-right direction of the box body (1) is formed on each of the anti-collision structures (112), and a side of the through-hole facing the battery module (3) is open.

13. The energy storage device (100) according to claim 12, wherein the plurality of anti-collision structures (112) comprise:
a plurality of first anti-collision structures (1121), wherein the plurality of first anti-collision structures (1121) are arranged adjacent to the battery management system (2), two adjacent first anti-collision structures (1121) are spaced apart in the front-rear direction of the box body (1) to define a first sliding slot (1122), and at least a part of the battery management system (2) is slidably matched in the first sliding slot (1122);
a plurality of second anti-collision structures (113), wherein the plurality of second anti-collision structures (113) are respectively arranged on two side walls of the box body (1) in the front-rear direction, at least two of the second anti-collision structures (113) (112) are arranged on each of the side walls, the at least two second anti-collision structures (113) are spaced apart in the up-down direction of the box body (1), and the plurality of second anti-collision structures (113) are respectively opposite to two side surfaces of the battery module (3) in the front-rear direction of the box body (1); and
a plurality of third anti-collision structures (114), wherein the plurality of third anti-collision structures (114) are arranged on a side of the box body (1) adjacent to the battery module (3) in the up-down direction, the plurality of third anti-collision structures (114) are spaced apart from each other in the front-rear direction of the box body (1), and a bottom surface of the battery module (3) is supported on the plurality of third anti-collision structures (114).

14. The energy storage device (100) according to claim 13, wherein the battery management system (2) comprises a plate body (21) and at least one heat dissipation plate (22), at least one electrical element (23) is arranged on a side of the plate body (21) adjacent to the battery module (3), the heat dissipation plate (22) is arranged on a side of the plate body (21) facing away from the electrical element (23), the heat dissipation plate (22) is at least opposite to the electrical element (23), and the heat dissipation plate (22) is slidably matched in the first sliding slot (1122); and
the heat dissipation plate (22) comprises:
a first heat dissipation piece (221), wherein the first heat dissipation piece (221) is arranged on the plate body (21); and
a second heat dissipation piece (222), wherein the second heat dissipation piece (222) is connected to the first heat dissipation piece (221), the second heat dissipation piece (222) is located on a side of the first heat dissipation piece (221) away from the plate body (21), a width of the second heat dissipation piece (222) in the front-rear direction of the box body (1) is less than a width of the first heat dissipation piece (221) in the front-rear direction of the box body (1), and the second heat dissipation piece (222) is slidably matched in the first sliding slot (1122).

15. The energy storage device (100) according to any one of claims 1 to 14, wherein each of the battery cores (321) comprises a battery core body (323) and a plurality of terminals (324), and the plurality of terminals (324) are respectively arranged at two ends of the battery core body (323); and
the energy storage device (100) further comprises:
a plurality of terminal guide plates (38), wherein the plurality of terminal guide plates (38) are respectively in a one-to-one correspondence with the plurality of battery core groups (32), the terminal guide plate (38) is arranged on the battery module (3), the terminal guide plate (38) is located at one end of the plurality of battery cores (321), and the terminal guide plate (38) is electrically connected between terminals at the one end of the plurality of battery cores (321) and housings (325) of the battery core bodies of the plurality of battery cores (321);
a battery core sampling plate (39), wherein the battery core sampling plate (39) is arranged at the other end of the plurality of battery cores (321), and the battery core sampling plate (39) is electrically connected to at least the housings (325) of the plurality of battery cores (321);
a collection plate (40), wherein the collection plate (40) is arranged on a side of the battery core sampling plate (39) away from the battery module (3), at least one connector (401) is arranged on the collection plate (40), and the collection plate (40) is electrically connected to the battery core sampling plate (39) by the connector (401); and
a protective cover (41), wherein the protective cover (41) covers a side of the collection plate (40) away from the battery core sampling plate (39).

16. The energy storage device (100) according to any one of claims 1 to 15, wherein the battery management system (2) extends in the left-right direction of the box body (1), the battery module (3) and the battery management system (2) are arranged in the up-down direction of the box body (1), and the battery management system (2) is pivotably connected to the end cover assembly (12) around a central axis in the front-rear direction of the box body (1); and the battery management system (2) comprises:
a tray (24), wherein the tray (24) is pivotably connected to the end cover assembly (12); and
a plate body (21), wherein the plate body (21) is arranged on the tray (24), the power wire (25) and the communication wire (26) are arranged on the plate body (21), the power wire (25) and the communication wire (26) are located on a side of the plate body (21) adjacent to the center of the box body (1), and the power wire (25) extends in the left-right direction of the box body (1).

17. The energy storage device (100) according to any one of claims 1 to 16, wherein a plurality of guide rails (115) are arranged on a bottom wall of the box body (1), the plurality of guide rails (115) all extend in the left-right direction of the box body (1), and the plurality of guide rails (115) are spaced apart from each other in the front-rear direction of the box body (1);
the battery module (3) is arranged in a push-pull manner in the box body (1) in the left-right direction of the box body, and the bottom surface of the battery module (3) is supported on the plurality of guide rails (115); and
each of the guide rails (115) comprises:
a first connection segment (1151), wherein the first connection segment (1151) extends in the up-down direction of the box body (1), and one end of the first connection segment (1151) is connected to the bottom wall of the box body (1);
a second connection segment (1152), wherein the second connection segment (1152) extends in the front-rear direction of the box body (1), the second connection segment (1152) is connected to the other end of the first connection segment (1151), and the bottom surface of the battery module (3) is supported on the second connection segment (1152); and
at least one third connection segment (1153), wherein one end of the third connection segment (1153) is connected to a free end of the second connection segment (1152), and the other end of the third connection segment (1153) extends obliquely toward the bottom wall of the box body (1).

18. The energy storage device (100) according to any one of claims 1 to 17, wherein at least one suspension member (1211) is arranged on each of the end covers (121);
the energy storage device (100) further comprises:
a plurality of mounting ears (6), wherein the plurality of mounting ears (6) are respectively arranged at a left end and a right end of the box body (1), the plurality of mounting ears (6) are respectively matched with the first end cover assembly (12) and the second end cover assembly (13), the first end cover assembly (12) and the second end cover assembly (13) are each provided with an accommodating space, the plurality of mounting ears (6) are hidden in the accommodating spaces, and the box body (1) is adapted to be connected to a wall by the plurality of mounting ears (6); and
each of the mounting ears (6) comprises:
a first mounting piece (61), wherein the first mounting piece (61) is adapted to be connected to the wall; and
a second mounting piece (62), wherein one end of the second mounting piece (62) is connected to the first mounting piece (61), the other end of the second mounting piece (62) extends toward the center of the accommodating space, at least one suspension hole (621) is formed on the second mounting piece (62), and the box body (11) is adapted to be mounted on the wall through matching between the suspension member (1211) and the suspension hole (621).

19. The energy storage device (100) according to any one of claims 1 to 18, wherein a length of the energy storage device (100) is L₁, a width of the energy storage device (100) is L₂, a height of the energy storage device (100) is L₃, and L₁, L₂, and L₃ respectively satisfy: 0 mm < L₁ ≤ 685 mm, 0 mm < L₂ ≤ 135 mm, and 0 mm < L₃ ≤ 185 mm.

20. An energy storage device control system (200), comprising:
a plurality of energy storage devices (100), the plurality of energy storage devices (100) being connected in parallel, each of the energy storage devices (100) comprising a battery management system and a battery information collector (202), and the energy storage device (100) being the energy storage device (100) according to claims 1 to 19;
a battery management unit (201), the battery management unit (201) being communicatively connected to each of the battery management systems (2) in the plurality of energy storage devices (100), and the battery information collector (202) being communicatively connected to the battery management system (2); and
an energy management system (203) or an inverter, the energy management system (203) or the inverter being communicatively connected to the battery management unit (201).
